# EUROPEAN PATENT SPECIFICATION

(11) **EP 1 092 622 B1**
(45) Date of publication and mention of the grant of the patent: **25.08.2004**
(21) Application number: 00122465.8
(22) Date of filing: 13.10.2000
(51) Int. Cl.: B62M 23/02

(54) **Motor-driven assist unit**
Hilfsantriebseinheit
Unité à assistance motorisée

(30) Priority: 13.10.1999 JP 29074399; 13.10.1999 JP 29084399
(43) Date of publication of application: 18.04.2001
(73) Proprietor: Honda Giken Kogyo Kabushiki Kaisha, Minato-ku, Tokyo (JP)
(72) Inventor: Igarashi, Masashi, 4-1, Chuo 1-chome, Wako-shi, Saitama (JP); Yahagi, Kunio, 4-1, Chuo 1-chome, Wako-shi, Saitama (JP); Iseno, Mitsuru, 4-1, Chuo 1-chome, Wako-shi, Saitama (JP); Maruyama, Tomoyuki, 4-1, Chuo 1-chome, Wako-shi, Saitama (JP)
(74) Representative: Liska, Horst, Dr.-Ing.

(56) References cited:
- EP-A- 0 739 812
- EP-A- 0 818 386
- EP-A- 0 825 101
- PATENT ABSTRACTS OF JAPAN vol. 1997, no. 07, 31 July 1997 (1997-07-31) & JP 09 066882 A (YAMAHA MOTOR CO LTD), 11 March 1997 (1997-03-11)
- PATENT ABSTRACTS OF JAPAN vol. 1996, no. 07, 31 July 1996 (1996-07-31) & JP 08 058671 A (TEC CORP), 5 March 1996 (1996-03-05)
- PATENT ABSTRACTS OF JAPAN vol. 1998, no. 05, 30 April 1998 (1998-04-30) & JP 10 016870 A (YAMAHA MOTOR CO LTD), 20 January 1998 (1998-01-20)
- PATENT ABSTRACTS OF JAPAN vol. 2000, no. 02, 29 February 2000 (2000-02-29) & JP 11 301551 A (MATSUSHITA ELECTRIC IND CO LTD), 2 November 1999 (1999-11-02)
- PATENT ABSTRACTS OF JAPAN vol. 1996, no. 11, 29 November 1996 (1996-11-29) & JP 08 175462 A (YAMAHA MOTOR CO LTD), 9 July 1996 (1996-07-09)
- PATENT ABSTRACTS OF JAPAN vol. 1997, no. 10, 31 October 1997 (1997-10-31) & JP 09 142368 A (TEC CORP), 3 June 1997 (1997-06-03)
- PATENT ABSTRACTS OF JAPAN vol. 1998, no. 05, 30 April 1998 (1998-04-30) & JP 10 016873 A (TEC CORP), 20 January 1998 (1998-01-20)

## Description

The present invention relates to a vehicle with a motor-driven assist unit according to the preamble part of claim 1.

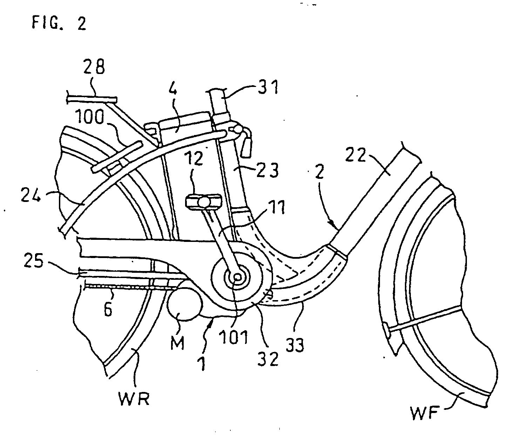

A vehicle of the generic kind is known from EP 0 816 215 A1. More precisely, document EP 0 816 215 A1 (cf. column 4, lines 45 - 54 and Fig. 2) discloses a vehicle with a motor-driven assist unit, wherein the vehicle has a support box for accommodating a battery. On the support box a male discharging terminal for descharging the battery is provided. This male terminal is connected to a female discharging terminal provided at the bottom of the battery upon insertion of the battery into the support box. Although not explicitly mentioned, it can be concluded that for the purpose of establishing an electrical contact between the vehicle side and the battery side discharging terminals, a positive and a negative contact is provided in an exposed state at the male terminal on the support box.

With this structure, document EP 0 816 215 A1 solves the objective problem of establishing a discharging connection between the battery and the motor-driven assist unit in a simple and secure way for supplying electric power from the battery to the motor-driven assist unit.

However, since a large current flows from the battery to the motor-driven assist unit, it is desirable to provide a simple and secure connection between the battery and the assist unit with power supply lines being as short as possible.

Further background-related prior art is explained in the following:

A motor-assisted bicycle including a drive system using a leg-power in combination of a drive system using a power of an electric motor, that is, a so-called assist-bicycle is provided with various sensors such as a leg-power sensor for detecting a leg-power applied to pedals and a rotation sensor for detecting a vehicular speed on the basis of a rotational speed of a crank shaft or the like,: wherein a drive torque of the electric motor is controlled on the basis of detection results from the sensors. The drive torque of the electric motor is controlled, for example, by subjecting power transistors connected between a battery and the electric motor to chopping control, thereby increasing/decreasing the amount of a drive current to be supplied from the battery to the electric motor.

Conventionally, a control board or control unit for subjecting power transistors to chopping control has been mounted on a vehicle at a suitable position separated from a motor-driven assist unit. However, if the control board or control unit is mounted outside the motor-driven assist unit, a space for mounting the control board or control unit must be additionally provided, and further wiring for connecting a drive motor in the motor-driven assist unit to the external control board or control unit must be laid out on a vehicular body, with a result that there occurs a problem in degrading the productivity, maintenance performance, and workability.

To solve such a technical problem, a motor-driven assist unit containing a control board has been proposed, for example, in Japanese Patent Laid-open No. Hei 8-175462.

To solve such a technical problem, a motor-driven assist unit containing a control unit has been proposed, for example, in Japanese Patent Laid-open No. Hei 8-175471.

According to the prior art motor-driven assist unit described in the above former document, it is possible to eliminate the need of provision of a control board mounting space on a vehicle, and to shorten the wiring for connecting the control board and a drive motor.

The prior art motor-driven assist unit is configured such that, to efficiently dispose the control board in the motor-driven assist unit, the control board is divided into two parts which are disposed in the existing spaces of the unit; however, in such a configuration, the number of parts constituting the board is large and the shape of the board is complicated. Further, the above patent document has not examined the cooling performance of the control board and a distribution of weights of the control board at all.

According to the prior art motor-driven assist unit described in the above latter document, it is not required to ensure a space for mounting the control unit on a vehicle, and it is possible to shorten wiring for connecting the control unit to a drive motor. The motor-driven assist unit, however, is required to be provided with, for example, a rotation sensor for detecting the rotational speed of a crank shaft or the like thereby determining the rotational speed of a vehicle, and to be required to be made more compact.

Since an output signal from the rotation sensor for detecting the vehicular speed is generally represented by a pulse signal, if a signal line extending from the rotation sensor to the control unit is longer, it is susceptible to noise. Also, since a power supply line for connecting a battery to the drive motor carries a relatively large current, the length of the power supply line is desirable to be as short as possible. According to the prior art, however, a relative positional relationship among a contact of a battery, an external electrode being in contact therewith, and the control unit has been not examined at all, and the external electrode has been separated from the control unit.

An object of the present invention is to solve the above-described problem of the prior art, and especially to provide a simple and secure connection between the battery and the assist unit with power supply lines being as short as possible.

To achieve the above first object, according to the present invention, there is provided a vehicle according to claim 1.

Since the positive and negative contacts are provided on the outer surface of the case of the motor-driven assist unit, the battery can be directly brought into contact with the motor-driven assist unit, to thereby shorten a power supply line for connecting the motor-driven assist unit to the battery. Also since the battery is sub-assembled with the motor-driven assist unit, it is possible to make compact the entire structure of the motor-assisted bicycle and improve the handling of the bicycle.

In the above motor-driven assist unit at least a rotation sensor for detecting the rotational speed of the crank shaft can be mounted on the control board, and the control board can be disposed near a rotor rotated in synchronization with the crank shaft in such a manner that a positional relationship between the rotation sensor and the rotor is kept at a predetermined relation.

With the above mentioned feature, since the rotation sensor can be disposed on the control board, even if the control board in contained in the motor-driven assist unit, the motor-driven assist unit is not enlarged. Since the rotation sensor is mounted on the control board, it is possible to shorten a signal line extending from the rotation sensor to the control board, and hence to suppress the inclusion of noise in the signal line.

Since the battery can be directly disposed on the motor-driven assist unit, it is possible to shorten the length of the power supply line for connecting the motor-driven assist unit to the battery.

The present invention configured as described above exhibits the following effects:
(1) According to the embodiment described in claim 8, since the control board is not divided into parts, the number of parts is reduced and also the control unit can be easily mounted. Further, since the effect of air-cooling the control board upon running of a vehicle is increased, it is possible to improve the cooling efficiency of the control board, and since the control board is disposed at a lower position, it is possible to lower the center of gravity of the motor-driven assist unit.
(2) According to the embodiment described in claim 9, it is possible to ensure a necessary area for mounting the control board by making effective use of the existing internal space without deforming an appearance shape of a lower front portion of the motor-driven assist unit, and hence to efficiently contain the control board in the motor-driven assist unit.
(3) According to the embodiment described in claim 10, since the circuit part mounting plane of the control board is directed inwardly, the maintenance of the mounting plane can be easily performed.
(4) According to the embodiment described in claim 11, since the motor-driven assist unit having a large mass is mounted under the body frame, it is possible to lower the center of gravity of the motor-assisted bicycle.
(5) According to the embodiment described in claim 12, since the electric motor and battery, each of which has a large mass, are disposed on the bottom of the vehicle and the central portion of the vehicle in the longitudinal direction respectively, it is possible to locate the center of gravity at a position under the central portion of the vehicle, and hence to improve the steerability.

Embodiments of the present invention can also exhibit the following effects:
(1) If the roation sensor is provided on the control unit and the control unit is disposed so that the rotation sensor is disposed near the rotor rotated in synchronization with the crank shaft, it is possible to eliminate the need of ensuring an additional space for mounting the rotation sensor and hence to make compact the entire motor-driven assist unit. Since the distance between the rotation sensor and the control unit can be shortened, it is possible to suppress the inclusion of noise in an output signal from the rotation sensor.
(2) If the positioning means is provided on the control unit to fix the control unit at a specific position of the motor-driven assist unit while keeping a specific posture, it is possible to keep the relative positional relationship between the rotation sensor and the rotor at a predetermined relationship only by positioning and fixing the control unit to the motor-driven assist unit, and hence to keep a high detection accuracy of the rotational speed of the vehicle.
(3) If the control unit is engaged with the motor-driven assist unit by the positioning means provided on one side portion of the control unit and is fastened to the motor-driven assist unit by the fastening means provided on the other side portion of the control unit, it is possible to simplify the fastening structure and to reduce the number of parts.
(4) If the large-diameter gear is disposed on the crank shaft and the control unit is laid out in a space around the crank shaft, it is possible to detect the rotational speed of the crank shaft by detecting the rotational speed of the large-diameter gear.
(5) If the control unit is disposed in front of and under the crank shaft in a posture of the motor-driven assist unit mounted to the body frame, it is possible to increase an effect of air-cooling the control unit, and hence to improve the efficiency of cooling the control unit.
(6) If the sensor for outputting an electric signal in response to a leg-power is contained in the motor-driven assist unit, it is possible to further miniaturize the motor-driven assist unit by making effective use of a dead space of the inside of the case of the unit. Also since it is not required to extract of the cord (lead wire) of the leg-power sensor outside the unit, it is possible to further enhance the hermetic characteristic of the unit.
(7) If the control unit is disposed above the crank shaft in a posture of the motor-driven assist unit mounted to the body frame, if the battery is mounted with its longitudinal direction taken along the seat post, the battery is disposed on the control unit, with a result that it is possible to shorten wiring for connecting the control unit to the battery. Also, if the heavy members are collectively disposed at a central portion of the vehicular body, it is possible to locate the center of gravity of the vehicular body at the central portion of the vehicular body.

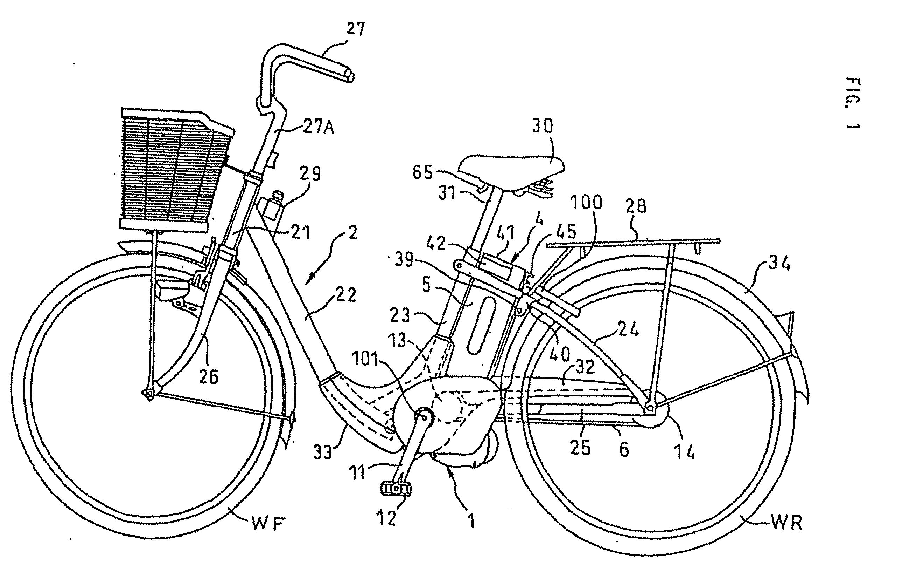

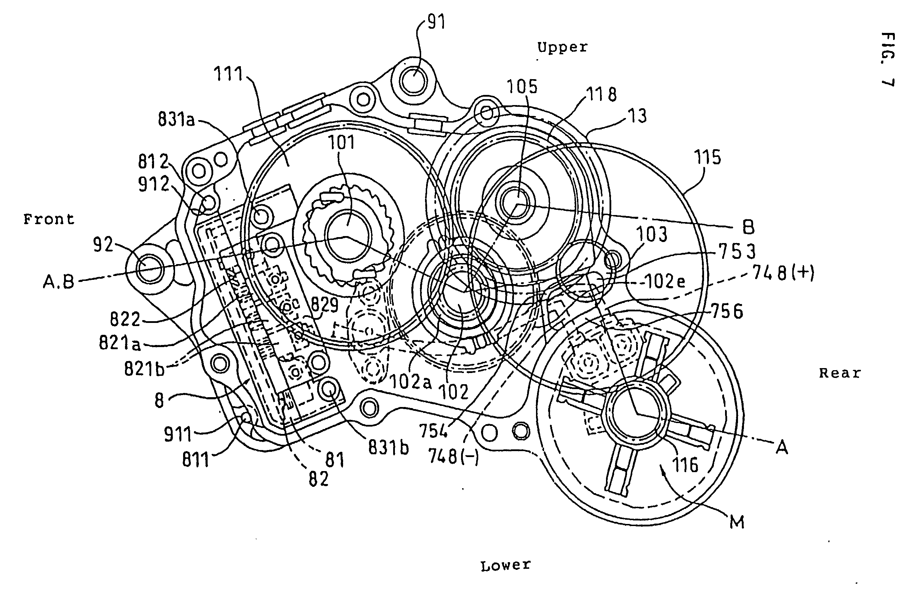

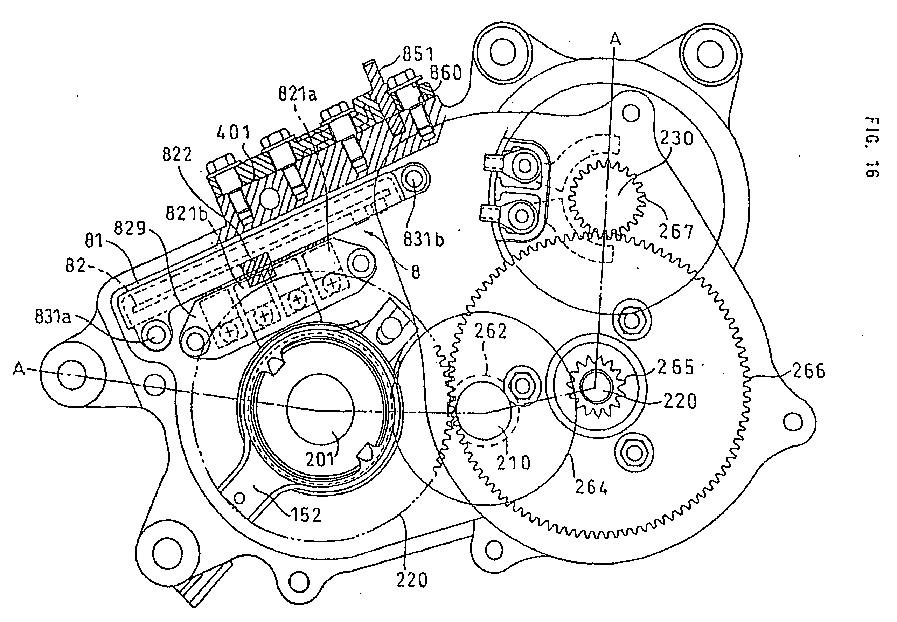

Hereinafter, the present invention will be described in detail with reference to the drawings. It is illustrated in:
Fig. 1:
   A side view of a motor-assisted bicycle of the present invention
Fig. 2:
   A right side view showing an essential portion of the bicycle shown in Fig. 1.
Fig. 3:
   An enlarged view of an essential portion shown in Fig. 1.
Fig. 4:
   A side view of a first embodiment of the motor-driven assist unit of the bicycle of the present invention, with parts partially cutaway.
Fig. 5:
   A sectional view, taken on line A-A of Fig. 2, showing gear trains.
Fig. 6:
   A sectional view, taken on line B-B of Fig. 2, showing gear trains.
Fig. 7:
   A side view of a second embodiment of a motor-driven assist unit of the bicycle of the present invention, with parts partially cutaway.
Fig. 8:
   A sectional view, taken on line A-A of Fig. 7, showing gear trains.
Fig. 9:
   A sectional view, taken on line B-B of Fig. 7, showing gear trains.
Figs. 10(a) to 10(c): ,
   Views illustrating the function of a first idle shaft.
Fig. 11:
   A side view of a motor-driven assist unit, a battery housing case, and their neighborhoods.
Fig. 12:
   A view illustrating a method of inserting/removing a battery in/from a battery housing case.
Fig. 13:
   A plan view of an operation/display panel of a residual power meter provided on the battery.
Fig. 14:
   A side view of a third embodiment of a motor-driven assist unit
Fig. 15:
   A top view showing the inside of a bottom portion of a battery housing case.
Fig. 16:
   A side view of a fourth embodiment of a motor-driven assist unit, with parts partially cutaway.
Fig. 17: '
   A sectional view taken on line A-A of Fig. 16 showing gear trains.
Fig. 18:
   A sectional view showing a method of mounting a control unit.

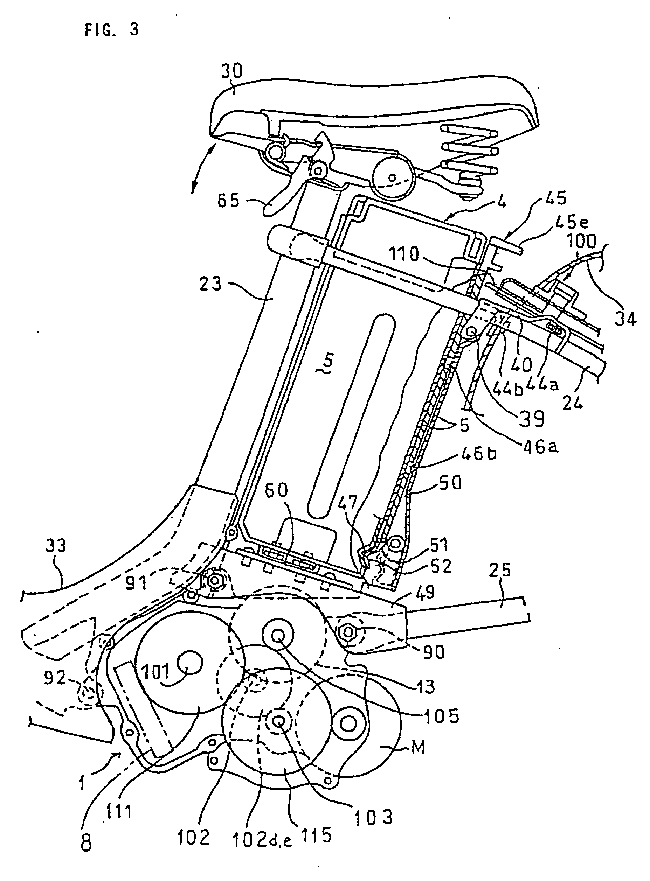

Fig. 1 is a left side view of a motor-assisted bicycle of the present invention; Fig. 2 is a right side view showing an essential portion of the bicycle shown in Fig. 1; and Fig. 3 is an enlarged view showing an essential portion of the bicycle shown in Fig. 1.

Referring to Fig. 1, a body frame 2 of a motor-assisted bicycle according to the present invention includes a head pipe 21 positioned on the front side of a body of the bicycle; a down pipe (main frame) 22 extending rearwardly, downwardly from the head pipe 21 and being at its lower portion curved in a downwardly projecting shape; and a seat post 23 raised upwardly, rearwardly from a portion, near the lower end, of the down pipe 22.

The seat post 23 is integrally connected to the down pipe 22, and accordingly, the body frame 2 is formed into a U-shape projecting downwardly as a whole. Since the seat post 23 extends upwardly, rearwardly from the connection portion with the down pipe 22 and the down pipe 22 extends forwardly, upwardly from the connection portion with the seat post 23, a gap between the seat post 23 and the down pipe 22 becomes larger toward the upper side from the connection portion therebetween. As a result, when getting on and off the bicycle, a rider is easy to stride across the U-shaped body frame 2.

The connection portion between the down pipe 22 and the seat post 23 and its neighborhood are covered with a resin cover 33. The resin cover 33, which is divided into upper and lower parts, is removably mounted. A handle post 27A is turnably inserted in the head pipe 21. A handlebar 27 is connected to an upper end of the handle post 27A, and a front fork 26 is connected to a lower end of the handle post 27A. The front fork 26 connected to the handle post 27A is steerable by the handlebar 27. A front wheel WF is rotatably supported by lower ends of the front fork 26.

A motor-driven assist unit 1 including an electric motor for assisting a leg-power is provided on a lower portion of the body frame 2. A power supply switch 29 for the motor-driven assist unit 1 is provided on a portion, near the head pipe 21, of the down pipe 22. It should be noted that the power supply switch 29 may be provided on the handlebar 27 in front of the handle post 27A.

A crank shaft 101 is rotatably supported by the motor-driven assist unit 1, and pedals 12 are rotatably supported via cranks 11 by right and left ends of the crank shaft 101. A pair of right and left rear lower arms 25 extend rearwardly from the motor-driven assist unit 1, and a rear wheel WR as a drive wheel is rotatably supported between rear ends of the rear lower arms 25. A pair of right and left rear upper arms 24 are provided between an upper portion of the seat post 23 and lower ends of the rear lower arms 25. A seat pipe 31, on an upper end of which a seat 30 is provided, is slidably inserted in the seat post 23, so that the vertical position of the seat 30 can be adjusted by sliding the seat pipe 31 in the seat post 23.

A battery housing case 5 (hereinafter, referred to as "housing case") for housing a battery 4 is mounted on the back side of the seat post 23 at a position under the seat 30. The battery 4, which contains a plurality of battery cells each having a size allowed to be housed in a battery case formed into an approximately rectangular parallelopiped shape, is disposed along the seat post 23 with its longitudinal direction taken nearly in the vertical direction.

A handle 41 with its grip portion positioned on the right side of the vehicular body is mounted on an end portion (upper end in Fig. 1) of the battery 4 in the longitudinal direction. The handle 41 is turnably supported by the battery 4, and is normally withdrawn in a recess provided at a corner of the battery 4. Since a rider generally stands on the left side of the vehicular body, the grip portion of the handle 1 is positioned on the right side of the vehicular body with its rotational shaft (not shown) disposed at a central portion of the vehicular body. With this arrangement, it is easy for the rider to raise the handle 41. Further, to allow the rider to easily check the residual power of the battery 4 from the riding position, a battery residue meter 42 is provided at a position, offset leftwardly from the seat 30, of the battery 4.

Referring to Fig. 3, an operating lever 45 for locking/unlocking the battery 4 and a wheel lock device 100 are disposed behind the battery 4. The operating lever 45 is inserted in a side chamber 50 provided behind the battery housing case. The side chamber 50 has a size longer in the vertical direction and an approximately rectangular shape. An engagement hook 52, which is biased clockwise on a right side view by a torsion spring 51, is provided in a lower portion of the side chamber 50. When the battery 4 is inserted in the housing case 5, the engagement hook 52 is engaged in a recess 47 provided in a lower portion of the battery 4, whereby the battery 4 is fixed in the housing case 5. The recess 47 is formed into an approximately V-shape. Since the lower portion of the battery 4 is fixed by the engagement hook 52, the housing state of the battery 4 is stably kept. That is to say, even if the vehicular body is vibrated, the battery 4 is not moved in both the vertical direction and lateral direction.

The seat 30 provided on the upper portion of the seat post 23 can be turned forwardly, by the unlocking operation of the lever 65, up to a position at which the seat 30 does not interfere with the withdrawal of the battery 4. However, in the state in which the engagement hook 52 is engaged in the recess 47, even if the seat 30 is turned forwardly, the battery 4 cannot be withdrawn upwardly.

The operating lever 45 is usually biased upwardly by a spring (not shown) suspended between the operating lever 45 and a wall of the side chamber 50. In the case of mounting the charged battery 4 to the bicycle, the seat 30 is turned forwardly, and the battery 4 is inserted from above into the housing case 5. When the battery 4 is almost inserted in the housing case 5, the lower end of the battery 4 is brought into contact with a side portion of the engagement hook 52 to push the engagement hook 52 counterclockwise. Then, when the battery 4 is further inserted in the housing case 5, the engagement hook 52 is elastically engaged in the V-shaped recess 47 formed in the battery 4, whereby the battery 4 is fixed in the housing case 5. At the same time, plus (+) and minus (-) output terminals (discharge contacts) provided on the bottom of the battery 4 are electrically, mechanically connected to a contact unit 60 screwed in a battery bracket 49 fixed, typically by welding, to the seat post 23. This connection is stable because of the dead weight of the battery 4 and the pressing by the engagement hook 52.

In the case of removing the battery 4, the operating lever 45 is depressed so that the engagement hook 52 is pushed down by the tip of the operating lever 45. The engagement hook 52 thus pushed down by the tip of the operating lever 45 is turned counterclockwise in the figure against the biasing force of the spring 51. As a result, the engagement hook 52 is escaped from the recess 47. In this way, the engagement of the engagement hook 52 in the recess 47 is released. After the engagement of the engagement hook 52 in the recess 47 is released, the battery 4 can be withdrawn upwardly. The handle 41 can be used for withdrawal of the battery 4.

An upper portion of the battery housing case 5 is fixed, by means of a screw 39, to a bracket 40 fixed, typically by welding, to the rear upper arm 24. The wheel lock device 100 and the rear fender 34 are also fixed to the bracket 40 by means of screws 44a and 44b, respectively.

A front end of the battery bracket 49 is welded to the seat post 23, and a rear end of the battery bracket 49 is bolted to both a front end of the rear lower arm 25 and a hanger portion 90 of the motor-driven assist unit 1. The motor-driven assist unit 1 has two hanger portions 91 and 92, in addition to the above hanger portion 90. These hanger portions 92, 91 and 90 of the motor-driven assist unit 1 are bolted to a rear end of the down pipe 22, a portion near the front end of the battery bracket 49, and the rear lower arm 25 near the rear end of the battery bracket 49, respectively. In this way, the motor-driven assist unit 1 is fixedly suspended from the body frame 2. It should be noted that since the hanger portion 92 is located under the crank shaft 101 of the motor-driven assist unit 1, the bottom, that is, the lowermost end of the U-shaped body frame 2 can be located under the crank shaft 101.

Since the bottom of the U-shaped body frame 2 is located at the low level as described above, it is possible to improve the ease of the rider's striding motion across the body frame 2. Further, since the motor-driven assist unit 1 is supported at its low level hanger portion 92 by the lower end of the down pipe 22, that is, disposed at a lower level as a whole, it is possible to lower the center of gravity of the motor-driven assist unit 1.

The motor-driven assist unit 1 contains the crank shaft 101, a first idle shaft 102, a second idle shaft 103, an output shaft 105 to which the drive sprocket 13 is connected, and gears 111, 102d, 102e, and 115 for transmitting a power between the shafts 101, 102, 103, and 105. The electric motor M having a rotational shaft 104 disposed in parallel to the crank shaft 101 is mounted to the motor-driven assist unit 1. The reason why the rotational shaft 104 of the electric motor M is in parallel to the crank shaft 101 is to reduce a portion, projecting rearwardly from the motor-driven assist unit 1, of the electric motor M. This makes it possible to reduce a gap between the crank shaft 101 and the rear wheel WR and hence to avoid the wheel base from becoming longer.

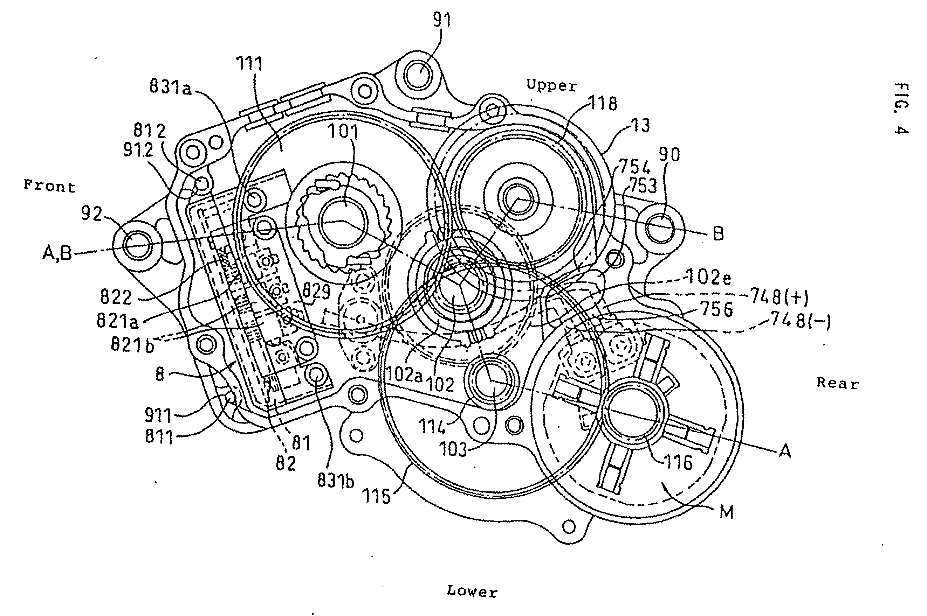

A leg-power inputted from the crank shaft 101 is acceleratedly transmitted to the first idle shaft 102 and is transmitted from the first idle shaft 102 to the output shaft 105, to rotate the drive sprocket 113. The rotation of the drive sprocket 13 is transmitted to a wheel sprocket 14 of the rear wheel WR (see Fig. 1) via a chain 6. The structure of the motor-driven assist unit 1 will be described in more detail with reference to Figs. 4, 5 and 6.

The battery 4 mounted on the battery bracket 49 located behind the seat post 23 supplies a power to the motor M, and the motor M generates an assist-power responding to a leg-power detected by a leg-power detecting mechanism (to be described later) provided on the first idle shaft 102. The rotation of the motor M is transmitted to the first idle shaft 102 via the second idle shaft 103, and is synthesized with an man-power (leg-power) on the first idle shaft 102. The resultant power is then transmitted to the output shaft 105.

As shown in Figs. 1 and 2, the whole of the drive sprocket 13 and an upper half of the chain 6 are covered with a chain cover 32. Since in this bicycle the drive sprocket 13 is not concentric with the crank shaft 101, it is not essential that the chain cover 32 has a circular-arc portion centered on the crank shaft 101; however, to obtain a good external appearance, prevent the catch of the rider's leg, protect the motor-driven assist unit 1, and ensure a conventional familiar image of a bicycle, the chain cover 32 is extended in a circular shape centered on the crank shaft 101 up to a position to cover the whole of the drive sprocket 13.

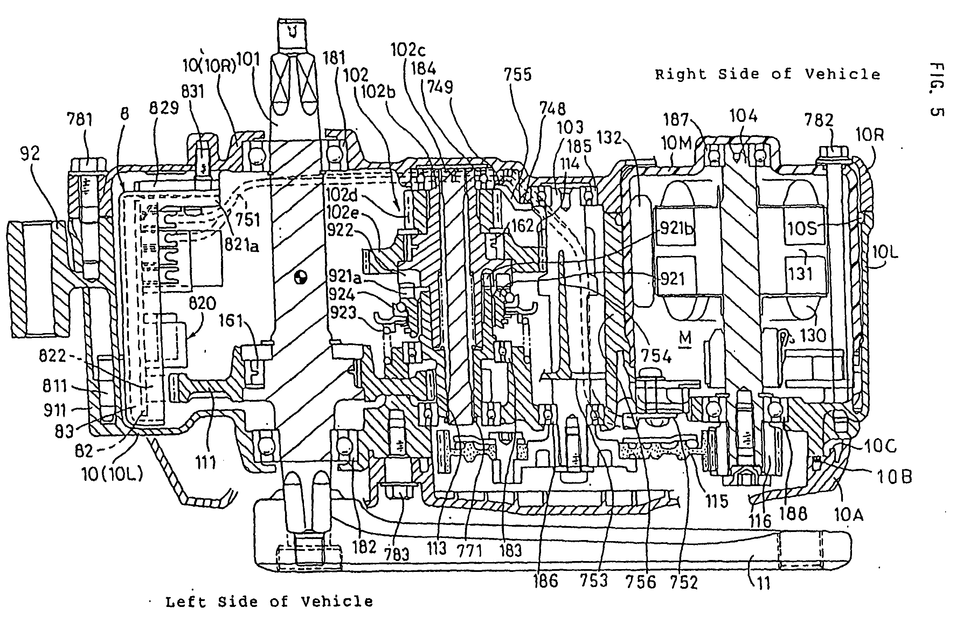

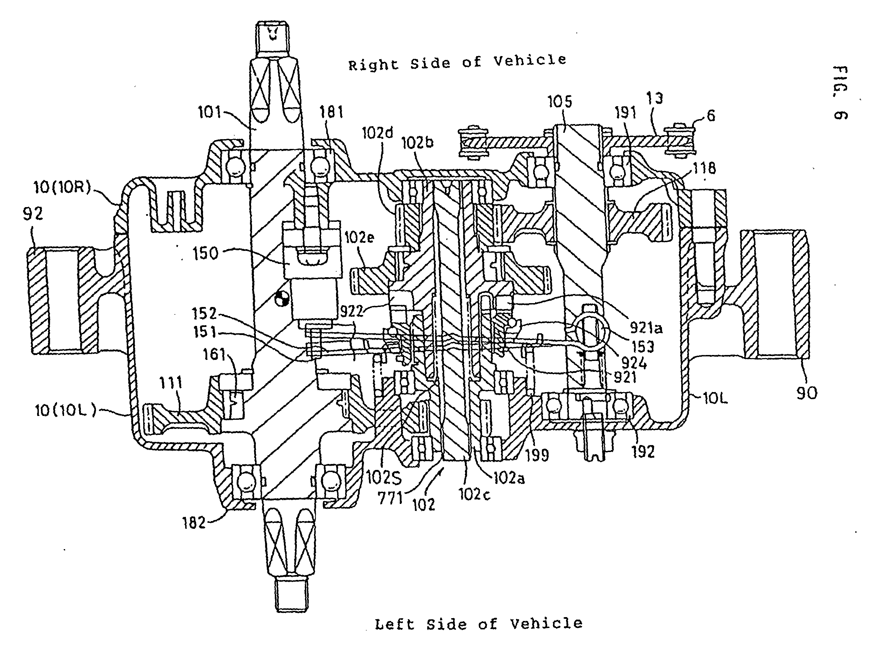

Fig. 4 is a side view of a first embodiment of the motor-driven assist unit 1, with parts partially cutaway; Fig. 5 is a sectional view, taken on line A-A of Fig. 4, showing gear trains; and Fig. 6 is a sectional view, taken on line B-B of Fig. 4, showing gear trains. In these figures, parts being the same as or similar to those described above are designated by the same characters.

Referring to Figs. 4 and 5, a case 10 of the motor-driven assist unit 1 is formed by connecting a left half (left case) 10L and a right half (right case) 10R, each of which is made from aluminum, to each other by means of a plurality of bolts 781.

According to this embodiment, since each of the hanger portions 90, 91 and 92 has no parting plane, the left and right cases 10L and 10R can be separated from each other by removing the bolts 781 while the motor-driven assist unit 1 is left mounted on the body frame 2. To be more specific, since the hanger portions 90, 91 and 92 are provided only on the left case 10L, the right case 10R can be removed while the left case 10L is left mounted on the body frame 2. As a result, it is possible to easily perform the maintenance of a control unit 8 and the motor M contained in the case 10 of the motor-driven assist unit 1. In addition, to perform the maintenance of a portion, on the left case 10L side, of the motor M and its drive system, the inside of the motor-driven assist unit 1 may be exposed by removing a resin cover 10A to be described later.

The crank shaft 101 as a leg-power input shaft is rotatably supported by the case 10 via bearings 181 and 182. A large-diameter acceleration gear 111 is rotatably supported on the crank shaft 101 via a one-way clutch 161, and accordingly, even if the crank shaft 101 is reversely rotated, the acceleration gear 111 is not reversely rotated. The first idle shaft 102 for matching the rotational direction of the crank shaft 101 with the rotational direction of the drive sprocket 13 is rotatably supported by the case 10 at a position offset rearwardly, downwardly from the crank shaft 101. In this embodiment, the first idle shaft 102 includes the leg-power (torque) detecting mechanism.

The first idle shaft 102 includes hollow-shaped first and second drive shafts 102a and 102b, which are separated from each other on the left and right sides and coaxially disposed in the transverse direction; a torsion bar 102c passing through the drive shafts 102a and 102b, with both ends spline-connected to the left end of the first drive shaft 102a and the right end of the second drive shaft 102b; and a spring 102S for elastically biasing the first and second drive shafts 102a and 102b to each other in the axial direction. A small-diameter gear teeth portion 113 formed on an small-diameter portion of the outer periphery of the first drive shaft 102a is meshed with the acceleration gear 111 of the crank shaft 101. The first drive shaft 102a is rotatably supported by the left case 10L via bearings 183a and 183b, and the second drive shaft 102b is rotatably supported by the right case 10R via a bearing 184.

With this configuration, since a leg-power inputted to the crank shaft 101 is accelerated by the acceleration gear 111 and the gear teeth portion 113, the torque of the leg-power is reduced, with a result that a torque applied to the torsion bar 102c is reduced. This makes it possible to miniaturize the torsion bar 102c, and hence to make compact the leg-power detecting mechanism as a whole.

In this embodiment, to easily handle the first idle shaft 102 as a single body by sub-assembling the two drive shafts 102a and 102b, and the torsion bar 102c into the first idle shaft 102, a clip 771 is fitted at the left end of the torsion bar 102c for preventing the falling of the drive shafts 102a and 102b and components associated therewith from the torsion bar 102c in a state in which the first idle shaft 102 is not rotatably supported by the case 10. To be more specific, the second drive shaft 102b is fixedly pressed in a right end portion of the torsion bar 102c, and the first drive shaft 102a is removably inserted on the left end portion of the torsion bar 102c and held thereon by the clip 771.

A first gear 102d is fixed to a small-diameter portion of the outer periphery of the second drive shaft 102b, and a second gear 102e is connected to a large-diameter portion of the outer periphery of the second drive shaft 102b via a one-way ratchet 162. Accordingly, when the bicycle runs by a man-power in a state in which the motor M is stopped, the gear 102e and components disposed on the motor M side from the gear 102e are not rotated.

A slider 921 having at its end surface two projecting cam portions 921a is spline-connected to a large-diameter portion of the outer periphery of the first drive shaft 102a in such a manner as to be slidable in the axial direction. A ball cup 924 is engaged with a displacement detecting lever 152 (see Fig. 6) and is usually biased to the second drive shaft 102b side by a coil spring 923. The ball cup 924 usually pushes the slider 921 to the second drive shaft 102b while absorbing the rotation of the slider 921.

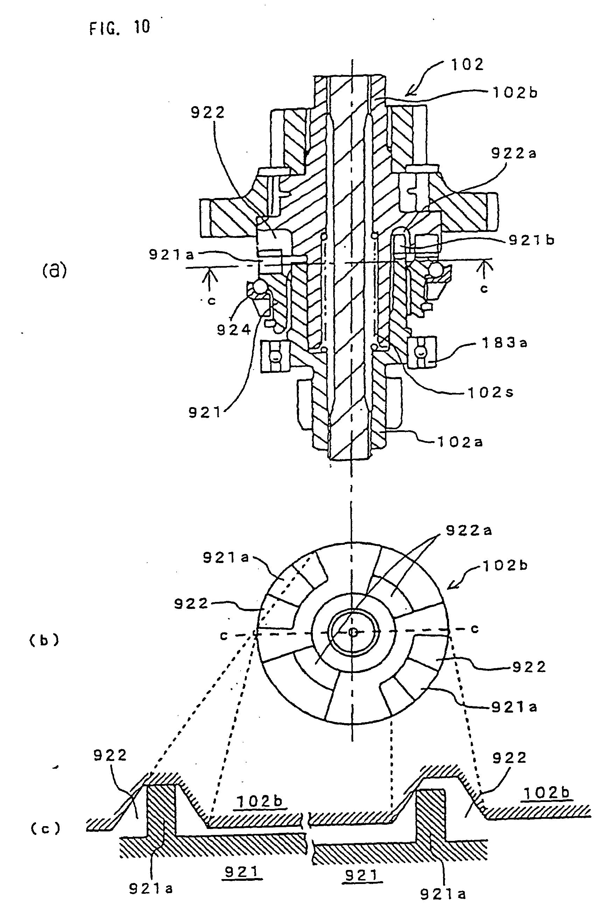

Figs. 10(a) to 10(c) are views illustrating the function of the second drive shaft 102b, wherein Fig. 10(a) is a sectional view; Fig. 10(b) is a sectional view taken on line C-C of Fig. 10(a); and Fig. 10(c) is a schematic view with the side surfaces of the end portion of the second drive shaft and the slider linearly depicted. In these figures, parts being the same as or similar to those described above are designated by the same characters.

In this embodiment, two recessed can grooves 922 extending in the circumferential direction, which are to be engaged with the two projecting cam portions 921a provided on the end surface, opposed to the second drive shaft 102b, of the slider 921, are formed in an end surface, opposed to the slider 921, of the second drive shaft 102b.

When a torsion (differential phase) in the rotational direction occurs between the first and second drive shafts 102a and 102b in response to a leg-power inputted to the crank shaft 101, a differential phase also occurs between the second drive shaft 102b and the slider 921. As a result, a position of the projecting cam 921a relative to the recessed cam groove 922 is changed from the relationship shown on the left side of Fig. 10(c) to the relationship shown on the right side of Fig. 10(c), so that the slider 921 is axially slid to the left side of the vehicular body and correspondingly the displacement detecting lever 152 is axially displaced to the left side of the vehicular body against the biasing force of the coil spring 923.

In this embodiment, an axial displacement of the displacement detecting lever 152 represents a leg-power inputted to the crank shaft 101. The leg-power thus detected as the axial displacement by the leg-power detecting mechanism is converted into an electric signal by a stroke sensor 150 (see Fig. 6), which will be described in detail later, and is transmitted to the control unit 8.

A stopper projection 921b is provided on an end surface of the first drive shaft 102a, and a stopper hole 922a to be fitted with the stopper projection 921b is provided in an end surface of the second drive shaft 102b for preventing occurrence of an excessive torsion between the drive shafts 102a and 102b. With this configuration, it is possible to effectively protect the miniaturized torsion bar 102c and hence to further miniaturize the torsion bar 102c.

In Figs. 5 and 6, the right side from the torsion bar 102c shows the state in which the projection cam 921a is just fitted in the recessed cam 922, that is, a torque by a leg-power does not occur (equivalent to the state shown on the left side of Fig. 10(c)), and the left side from the torsion bar 102c shows the state in which the slider 921 is moved to the left side of the vehicular body by the change in position of the projection cam 921a relative to the recessed cam 922, that is, a torque by the leg-power occurs (equivalent to the state shown on the right side of Fig. 10(c)).

The second idle shaft 103 is rotatably supported by the case 10 via bearings 185 and 186 at a position offset rearwardly, downwardly from the first idle shaft 102. A gear teeth portion 114 to be meshed with the second gear 102e of the second drive shaft 102b is formed on the outer periphery of the second idle shaft 103, and a resin gear 115 is screwed in an end portion of the second idle shaft 103.

The electric motor M is disposed at a position offset rearwardly, downwardly from the second idle shaft 103, and the rotational shaft 104 thereof is rotatably supported by the case 10 via bearings 187 and 188. In addition, the bearing 187 and a motor housing 10M are held only on the left case 10L (not held on the right case 10R). Accordingly, in the case of removing the right case 10R, it is not required to remove the electric motor M. This makes it possible to easily remove the right case 10R.

The motor housing 10M is fastened to the left case 10L via an O-ring 10S by means of a bolt 782. A stator rotor 131 including a motor coil 130 is fixed to the rotational shaft 104 of the motor M, and a magnet 132 is provided around the stator rotor 131. A gear teeth portion 116 to be meshed with the resin gear 115 of the second idle shaft 103 is fixed to one end of the rotational shaft 104. Accordingly, a gear noise between the gears 115 and 116 rotating at a high speed can be suppressed. Since the resin cover 10A is fastened to the left case 10L on the left sides of the gears 115 and 116 by means of a bolt 783, the noise reduction effect can be further enhanced.

A water-proof seal 10B is provided overall on a connection plane between the resin cover 10A and the left case 10L. To further enhance the water-proof, a water-proof rib 10C is provided along the outer periphery of the connection plane between the resin cover 10A and the left case 10L. Accordingly, the water-proof between the resin cover 10A and the left case 10L can be sufficiently ensured even if the resin cover 10A is deformed when the resin cover 10A is fastened to the left case 10L by the bolt 783.

Referring to Fig. 6, the output shaft 105 is located at a position offset rearwardly, upwardly from the first idle shaft 102, and is rotatably supported by the unit case 10 via bearings 191 and 192. A fourth gear 118 meshed with the first gear 102d of the second drive shaft 102b is provided on the output shaft 105, and the drive sprocket 13 is fixed to an end portion, exposed from the case 10, of the output shaft 105.

In a front space of the case 10, as shown in Figs. 3 to 5, a flat-plate shaped control unit 8 for controlling the motor-driven assist unit 1 is mounted at a position offset forwardly, downwardly from the crank shaft 101. The control unit 8 is configured such that a control board 82 is contained in a resin made dish-like case 81 with a gap therebetween and the board surface molded with an insulating resin 83. Various control circuits 820, a plurality of power transistors (FETs) 821a, a plurality of diodes 821b, and a rotation sensor 822 are mounted on the control board 82. The devices 821a and 821b, which cause heat generation upon operation thereof, are fixedly in area-contact with an aluminum made radiation plate 829. The radiation plate 829 is fixedly in area-contact with the right case 10R made from aluminum.

The control unit 8 is tilted downwardly from the front to rear of the vehicular body, with the component mounting plane of the control board 82 directed inwardly. The rotation sensor 822 is fixed in the vicinity of an end of the control board 82 in such a manner as to face to the gear teeth portion of the acceleration gear 111 of the crank shaft 101. Accordingly, the heat generated by the heat generating devices 821a and 821b is radiated to the right case 10R, and the rotation sensor 822 disposed in the vicinity of the left case 10L is not affected by the heat generated by the devices 821a and 821b.

In this way, according to this embodiment, since the rotation sensor 822 is provided on the control unit 8 and the control unit 8 is disposed such that the rotation sensor 822 is disposed in the vicinity of the rotor (large-diameter gear 111) rotated in synchronization with the crank shaft 101, it is possible to eliminate the need of additionally providing a space for the rotation sensor 822 and hence to make compact the whole of the motor-driven assist unit. Further, since a distance between the rotation sensor 822 and the control unit 8 can be reduced to zero, it is possible not only to eliminate the need of provision of a wiring cord therebetween but also to suppress the inclusion of noise in an output signal from the rotation sensor 822.

Since the control unit 8 is disposed at the position offset forwardly, downwardly from the crank shaft 101 in the posture in which the motor-driven assist unit 1 is mounted to the body frame 2, it is possible to enhance an effect of air-cooling the control unit 8 upon running of the bicycle, and hence to improve the cooling efficiency of the control unit 8.

According to this embodiment, since the control board 82 is tilted downwardly from the front to rear of the body frame 2 in the posture in which the motor-driven assist unit 1 is mounted to the body frame 2, the control board 82 can be contained in the motor-driven assist unit 1 by making effective use of the existing internal space without changing the appearance shape of the lower front portion of the motor-driven assist unit 1. In this case, by mounting the control board 82 in such a manner that the circuit component mounting plane thereof is directed inwardly, it is possible to facilitate the maintenance of the control board 82.

A positioning pin 811 extending in parallel to a bottom surface of the dish-like case 81 projects outwardly from the bottom surface of the dish-like case 81 at a position corresponding to a rotation sensor mounting position of the control board 82, and a position hole 911 in which the position pin 811 is to be inserted is formed in a portion, facing to the positioning pin 811, of the case 10. Similarly, a positioning pin 812 extending in parallel to a side surface of the dish-like case 81 projects outwardly from the side surface of the dish-like case 81 (see Fig. 4), and a positioning hole 912 in which the position pin 812 is to be inserted is formed in a portion, facing to the positioning pin 812, of the case 10. Accordingly, two planes of the control unit 8 can be positioned to keep a clearance between the rotation sensor 822 and the large-diameter gear 111 at a specific value.

The control unit 8, that is, the dish-like case 81 is positioned relative to the case 10 such that when the positioning pins 811 and 812 first comes into contact with the entrances of the positioning holes 911 and 912, the rotation sensor 822 does not face to the large-diameter acceleration gear 111, and thereafter, when the pins 811 and 812 are started to be inserted in the holes 911 and 912, the relative positional relationship (facing relationship) between the gear teeth portion of the acceleration gear 111 and the rotation sensor 822 becomes a predetermined relationship. Accordingly, in the case of fixing the control unit 8 to the case 10, the acceleration gear 111 does not interfere with the rotation sensor 822 disposed close to the acceleration gear 111, so that it is possible to easily assemble the control unit 8 in the case 10.

As shown in Fig. 5, the control unit 8 is fixed to the case 10 by fastening both side portions of an end portion, opposed to the end portion on which the rotation sensor 822 and the positioning pin 811 are provided, of the dish-like case 81, to the case 10 by means of screws 831 (831a and 831b, see Fig. 4).

In this way, according to this embodiment, since the positioning pins 811 and 812 as the positioning means are provided on the control unit 8 and the control unit 8 is fixed at the specific position in the motor-driven assist unit 1 with its specific posture kept, it is possible to keep the relative positional relationship between the rotation sensor 822 and the rotor (acceleration gear 111) at the predetermined relation, and hence to ensure the accuracy of detection of the rotational speed of the rotor.

Further, according to this embodiment, since one side portion of the control unit 8 is engaged with the case 10 of the motor-driven assist unit 1 by the positioning means provided on the one side portion of the control unit 8 and the other side portion of the control unit 8 is fastened to the case 10 by the fastening means, it is possible to simplify the fastening structure and to reduce the number of parts.

As shown in Fig. 5, since a power supply terminal 752 is disposed on an end surface, on the output side, of the electric motor M, a power supply cord 751 is required to extend from the output side of the electric motor M to the control unit 8. With respect to the extension of the power supply cord 751, since the many gear trains are disposed on the output side of the electric motor M in the case 10, the power supply cord 751 may be desirable to extend along the inner end surface of the right case 10R rather than extend along the inner end surface of the left case 10L.

According to this embodiment, a second inner wall 754 is additionally provided in such a manner as to be in parallel to an inner wall 756, disposed adjacently to the motor housing 10M, of the left case 10L, to form a space (cord passage) 753 surrounded by the inner walls 754 and 756. The power supply cord 751 led from the end surface, on the output side, of the electric motor M extends to the inner end surface of the right case 10R through the cord passage 753, and further extends to the control unit 8 along the inner end surface of the right case 10R.

With this configuration, since the power supply cord 751 extends, in the unit case 10, from the inner end surface side of the left case 10L to the inner end surface of the right case 10R through the cord passage 753, the power supply cord 751 does not interfere with the gear trains and the other components.

Further, according to this embodiment, to restrict the power supply cord 751 on the inner end surface of the right case 10R, a clamper 755 is provided in such a manner as to cross between bearing bosses 749 and 748 erected on the inner end surface of the right case 10R for supporting the bearings 184 and 185. The power supply cord 751 is made to pass through a passage surrounded by the bosses 749 and 748 and the clamper 755, to be thus clamped. In this way, by providing the clamper 755 in such a manner that it crosses between the existing bosses 749 and 749, it is possible to certainly clamp the power supply cord 751 with a simple structure.

According to the motor-driven assist unit configured as described above, a leg-power as a man-power is inputted to the crank shaft 101 via the pedals 12 and the cranks 11, and is transmitted from the first drive shaft 102a to the second drive shaft 102b of the first idle shaft 102 via the acceleration gear 111. On the other hand, a rotational torque of the electric motor M is transmitted to the second drive shaft 102b via the gear 115, second idle shaft 103, gear teeth portion 114, and second gear 102e, and is synthesized with the leg-power on the second drive shaft 102b. The resultant power on the second drive shaft 102b is transmitted to the output shaft 105 via the first gear 102d and fourth gear 118, and is further transmitted to the rear wheel WR via the drive sprocket 13 and chain 6.

Here, as shown in Fig. 6, an approximately central portion of a displacement detecting lever 152 with its one end swingably supported by a pin 153 is engaged with the ball cup 924 of the first idle shaft 102, and a stroke detecting shaft 151 of the stroke sensor 150 fixed to the right case 10R is connected to the other end of the displacement detecting lever 152. Accordingly, when a differential phase occurs between the first and second drive shafts 102a and 102b of the first idle shaft 102 in response to a leg-power inputted to the crank shaft 101, the ball cup 924 is axially displaced in accordance with the differential phase. The displacement detecting lever 152 is swung by the axial displacement of the ball cup 924, and the swing motion of the lever 152 is transmitted to the stroke sensor 150. In this way, the leg-power inputted to the crank shaft 101 is detected by the stroke sensor 150.

The detected leg-power is converted into an electric signal, which is then supplied to the control unit 8. The control unit 8 determines a most suitable assist torque on the basis of a rotational speed of the crank shaft (acceleration gear 111) detected by the rotation sensor 822 and the above-described leg-power, and controls, by the power transistors 821a, a drive current to be supplied to the electric motor M at such a value as to allow the electric motor M to generate the above assist-power.

According to this embodiment, since the leg-power detecting mechanism for converting a leg-power inputted to the crank shaft 101 into a mechanical displacement is provided on the first idle shaft 102 adjacent to the crank shaft 101, it is possible to eliminate the need of provision of a space which is required if the leg-power detecting mechanism is provided independently from the first idle shaft 102, and hence to ensure a space required for disposing the control unit 8 in the case 10 of the motor-driven assist unit 1 without enlargement of the case 10 of the motor-driven assist unit 1.

According to this embodiment, since the second drive shaft 102b is usually biased to the right case 10R side (bearing 184 side) by the spring 102s to be positioned, the axial position of the recessed cam groove 922 formed in the end surface of the second drive shaft 102b is also positioned relative to the right case 10R, and further, since the stroke sensor 150 is fixed to the boss provided on the right case 10R, it is accurately positioned relative to the right case 10R.

Here, as described above, according to this embodiment, a displacement of the first drive shaft 102a relative to the second drive shaft 102b is detected as a leg-power by the stroke sensor 150, and therefore, if a relative positional difference occurs between the second drive shaft 102b and the stroke sensor 150, it becomes impossible to accurately detect the leg-power. According to this embodiment, however, since the second drive shaft 102b and the stroke sensor 150 are positioned relative to the same member (right case 10R) as described above, the relative positional relationship between the second drive shaft 102b and the stroke sensor 150 can be usually kept constant, with a result that it is possible to accurately detect the leg-power.

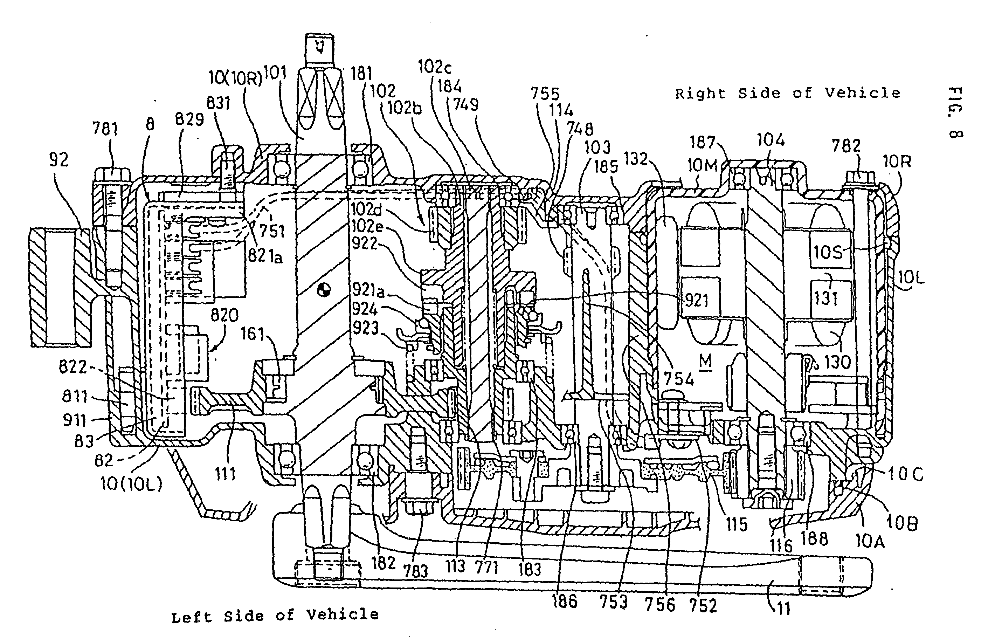

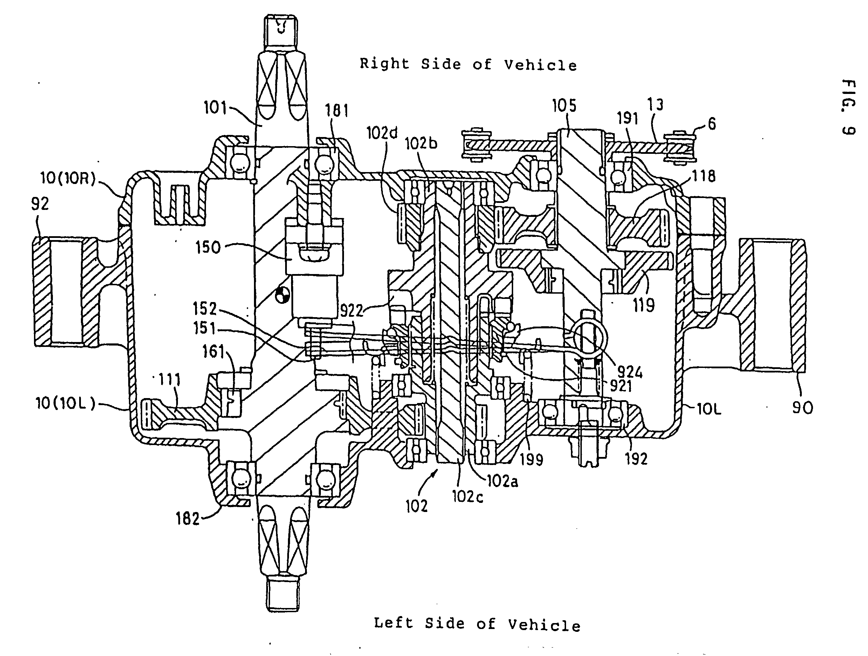

Fig. 7 is a side view of a second embodiment of the motor-driven assist unit 1, with parts partially cutaway; Fig. 8 is a sectional view, taken on line B-B, showing gear trains; and Fig. 9 is a sectional view, taken on line A-A, showing gear trains. In these figures, parts being the same as or similar to those described above are designated by the same characters.

According to the first embodiment, an assist-power generated by the drive motor M is transmitted to the first idle shaft 102 via the second idle shaft 103, being synthesized with a leg-power on the first idle shaft 102, and is transmitted to the output shaft 105; however, according to the second embodiment, an assist-power generated by a drive motor M is directly transmitted to an output shaft 105 via a second idle shaft 103.

To be more specific, an assist-power generated by a rotational shaft 104 of the drive motor M is transmitted to the second idle shaft 103 via a resin gear 115. A gear teeth portion 103a meshed with a gear 119 of the output shaft 105 is formed on the second idle shaft 103. The assist-power, having been transmitted to the second idle shaft 103, is transmitted to the output shaft 105 via the gear teeth portion 103a and the gear 119.

On the other hand, a leg-power inputted to a crank shaft 101 is transmitted to a first idle shaft 102 via an acceleration gear 111, the second idle shaft 103, and a gear teeth portion 113 of a first drive shaft 102, and is further transmitted to the output shaft 105 via a gear teeth portion of a second drive shaft 102b and a fourth gear 118 of the output shaft 105. The leg-power is synthesized with the assist-power on the output shaft 105.

In this way, according to this embodiment, since an assist-power generated by the electric motor M is directly transmitted to the output shaft 105, it is possible to reduce the number of gears provided on the first idle shaft as compared with the above embodiment in which the first idle shaft is used as a synthesizing shaft. This is effective to increase the occupied space of a leg-power detecting mechanism on the first idle shaft and hence to increase the degree of freedom in design.

Referring again to Fig. 1, an embodiment of the control unit of the motor-driven assist unit of the bicycle of the present invention will be described.

The configuration common to that of the embodiment of the above-described control board is omitted.

In this embodiment, since the connection portion between the down pipe 22 and the seat post 23 is laid out in front of the motor-driven assist unit 1, the motor-driven assist unit 1 can be disposed at a lower position, with a result that the center of gravity of the bicycle can be lowered. Further, since the height of the bottom of the body frame 2 can be lowered, the ease of the rider's striding action across the body frame 2 can be improved.

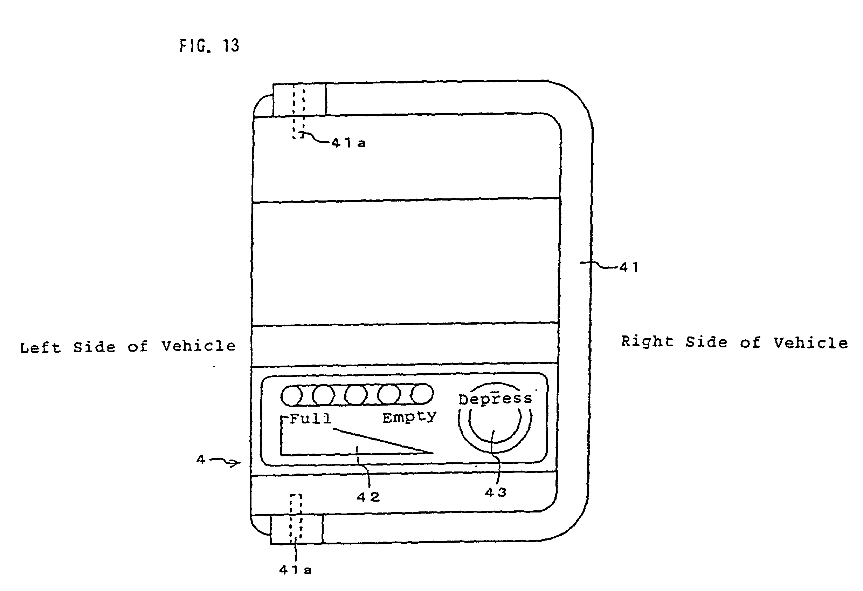

A handle 41 is mounted on an end portion (upper end in Fig. 1) of the battery 4 in the longitudinal direction in such a manner as to be offset on the right side of the vehicular body (rotational shaft 41a is on the left side of the vehicular body) as shown in Fig. 13.

The handle 41 is turnably mounted, and is usually fallen on the battery 4. Since a rider generally stands on the left side of the vehicular body, the handle 41 is disposed on the right side of the vehicular body and the rotational shaft 41a thereof is disposed on the left side of the vehicular body. With this configuration, the handle 41 is easy to be raised.

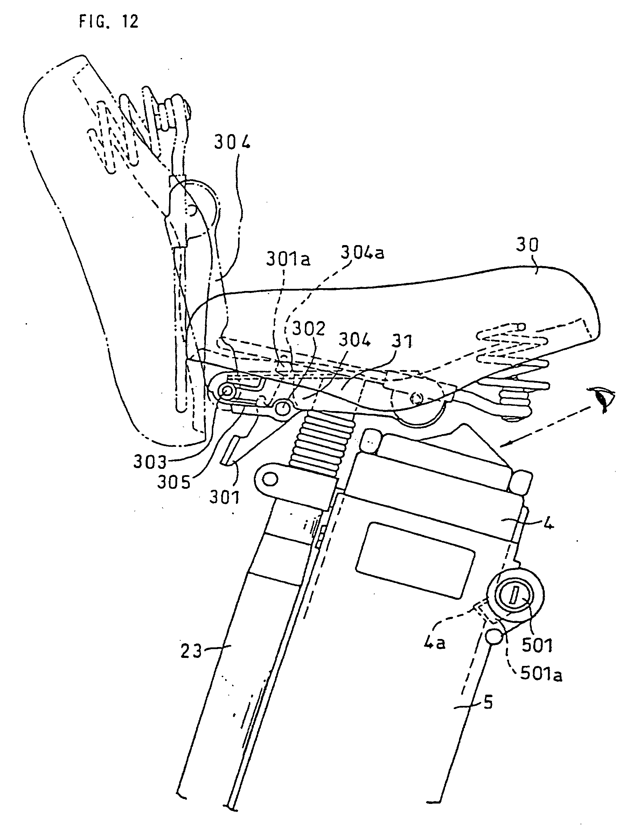

A residual power meter 42 is provided on an upper surface, on which the handle 41 is provided, of the battery 4. A residual power is indicated when a push button 43 is depressed. To allow a rider to easily check the residual power meter 42 from above a rear portion of the seat 30, the residual power meter 42 is mounted to a plane shown by an arrow in Fig. 12, of the battery 4. With this arrangement of the residual power meter 42, a rider can check the residual power from above in a standing state.

In addition, according to this embodiment, unlike a usual bicycle, the drive sprocket is offset from the root of the crank shaft 101; however, to ensure a good external appearance, prevent the catch of a rider's leg by the crank shaft 101, and protect the motor-driven assist unit 1, a front portion of the chain cover 32 is formed into an approximately circular shape around the crank shaft 101. As a result, as shown in Fig. 1, the front portion of the chain cover 32 covers the drive sprocket as if the drive sprocket is connected to the root of the crank shaft 101.

In a front space of the case 10, as shown in Fig. 5, a control unit 8 for controlling the motor-driven assist unit 1 is mounted at a position offset forwardly, downwardly from the crank shaft 101. The control unit 8 is configured such that a control circuit board 82 is contained in a resin made dish-like case 81 with a gap therebetween and the board surface molded with an insulating resin 83. Various control circuits 820, a plurality of power transistors (FETs) 821a, a plurality of diodes 821b (see Fig. 16), and a rotation sensor 822 are mounted on the control circuit board 82. The devices 821a and 821b, which cause heat generation upon operation thereof, are fixedly in area-contact with an aluminum made radiation plate 829. The rotation sensor 822 is fixed in the vicinity of an end of the control circuit board 82 in such a manner as to face to the gear teeth portion of the acceleration gear 111 of the crank shaft 101. Accordingly, the heat generated by the heat generating devices 821a and 821b is radiated to the right case 10R, and the rotation sensor 822 disposed in the vicinity of the left case 10L is not affected by the heat generated by the devices 821a and 821b.

In this way, according to this embodiment, since the rotation sensor 822 is provided on the control unit 8 and the control unit 8 is disposed such that the rotation sensor 822 is disposed in the vicinity of the rotor (large-diameter gear 111) rotated in synchronization with the crank shaft 101, it is possible to eliminate the need of additionally providing a space for the rotation sensor 822 and hence to make compact the whole of the motor-driven assist unit. Further, since a distance between the rotation sensor 822 and the control unit 8 can be reduced to zero, it is possible to suppress the inclusion of noise in an output signal from the rotation sensor 822.

Since the control unit 8 is disposed at the position offset forwardly, downwardly from the crank shaft 101 in the posture in which the motor-driven assist unit 1 is mounted to the body frame 2, it is possible to enhance an effect of air-cooling the control unit 8 upon running of the bicycle, and hence to improve the cooling efficiency of the control unit 8.

A positioning pin 811 extending in parallel to a bottom surface of the dish-like case 81 projects outwardly from the bottom surface of the dish-like case 81 at a position corresponding to a rotation sensor mounting position of the control board 82, and a position hole 911 in which the position pin 811 is to be inserted is formed in a portion, facing to the positioning pin 811, of the case 10. Similarly, a positioning pin 812 extending in parallel to a side surface of the dish-like case 81 projects outwardly from the side surface of the dish-like case 81 (see Fig. 4), and a positioning hole 912 in which the position pin 812 is to be inserted is formed in a portion, facing to the positioning pin 812, of the case 10. Accordingly, two planes of the control unit 8 can be positioned to keep a clearance between the rotation sensor 822 and the large-diameter gear 111 at a specific value.

The control unit 8, that is, the dish-like case 81 is positioned relative to the case 10 such that when the positioning pins 811 and 812 first comes into contact with the entrances of the positioning holes 911 and 912, the rotation sensor 822 does not face to the large-diameter acceleration gear 111, and thereafter, when the pins 811 and 812 are started to be inserted in the holes 911 and 912, the relative positional relationship (facing relationship) between the gear teeth portion of the acceleration gear 111 and the rotation sensor 822 becomes a predetermined relationship.

As shown in Fig. 5, the control unit 8 is fixed to the case 10 by fastening both side portions of an end portion, opposed to the end portion on which the rotation sensor 822 and the positioning pin 811 are provided, of the dish-like case 81, to the case 10 by means of screws 831 (831a and 831b, see Fig. 4).

In this way, according to this embodiment, since the positioning pins 811 and 812 as the positioning means are provided on the control unit 8 and the control unit 8 is fixed at the specific position in the motor-driven assist unit 1 with its specific posture kept, it is possible to keep the relative positional relationship between the rotation sensor 822 and the rotor (acceleration gear 111) at the predetermined relation, and hence to ensure the accuracy of detection of the rotational speed of the rotor.

Further, according to this embodiment, since one side portion of the control unit 8 is engaged with the case 10 of the motor-driven assist unit 1 by the positioning means provided on the one side portion of the control unit 8 and the other side portion of the control unit 8 is fastened to the case 10 by the fastening means, it is possible to simplify the fastening structure and to reduce the number of parts.

The detected leg-power is converted into an electric signal, which is then supplied to the control unit 8. The control unit 8 determines a most suitable assist torque on the basis of a rotational speed of the crank shaft (acceleration gear 111) detected by the rotation sensor 822 and the above-described leg-power, and controls, by the power transistors 821a, a drive current to be supplied to the electric motor M at such a value as to allow the electric motor M to generate the above assist-power.

According to this embodiment, since the leg-power detecting mechanism for converting a leg-power inputted to the crank shaft 101 into a mechanical displacement is provided on the first idle shaft 102 adjacent to the crank shaft 101, it is possible to eliminate the need of provision of a space which is required if the leg-power detecting mechanism is provided independently from the first idle shaft 102, and hence to ensure a space required for disposing the control unit 8 in the case 10 of the motor-driven assist unit 1 without enlargement of the case 10 of the motor-driven assist unit 1.

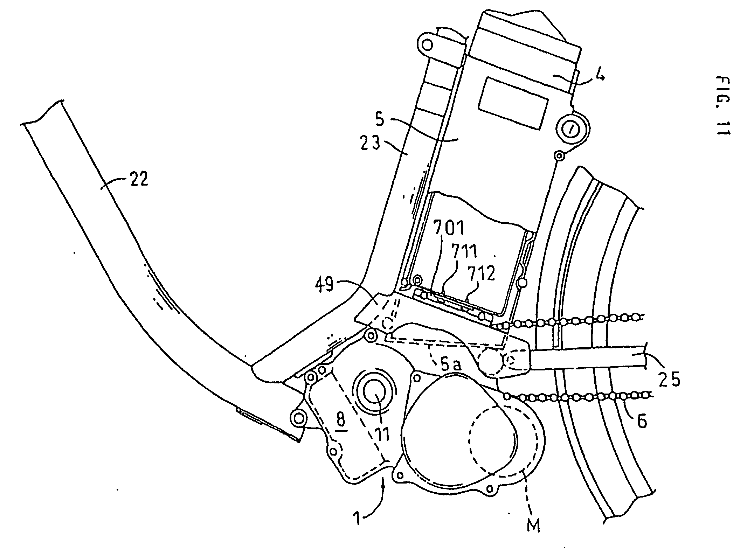

Fig. 11 is a side view showing the motor-driven assist unit 1, the battery housing case 5, and their neighborhoods of the motor-assisted bicycle. In this figure, for an easy understanding, the chain cover 32, pedals 12, and the like are omitted.

An electrode socket 701 is mounted on an upper portion of the motor-driven assist unit 1 in the state in which the motor-driven assist unit 1 is mounted on the body frame, and electrodes 711 and 712 are exposed from an upper surface of the electrode socket 701. Lead wires (not shown) of the electrodes 711 and 712, which pass through the case of the motor-driven assist unit 1, are connected to the electric motor M, control unit 8, and the like in the motor-driven assist unit 1.

The battery housing case 5 formed into a cylindrical shape is mounted on the back surface of the seat post 23 in such a manner that a skirt portion 5a provided on the bottom of the battery housing case 5 strides across a bracket 49 for connecting the seat post 23 to the chain stays 25. The electrodes 711 and 712 of the electrode socket 701 appear on the inner bottom of the skirt portion 5a. A bottom surface of the battery 4 has contacts (not shown) which are brought into contact with and electrically connected to the electrodes 711 and 712 when the battery 4 is housed in the battery housing case 5.

The battery 4 is pushed down to be inserted in the battery housing case 5 and is pulled up to be removed from the battery housing case 5; however, since the seat 30 is present in the insertion/removal path of the battery 4 in/from the battery housing case 5, the battery 30 cannot be inserted in and removed from the battery housing case 5 unless the seat 30 is shifted from the above path. According to this embodiment, as shown in Fig. 7, upon insertion/removal of the battery 4 in/from the battery housing case 5, a seat lock lever 301 supported by a shaft 302 is swung forwardly around the shaft 302 with respect to a seat bracket 304 provided on an upper end of a seat pipe 31, to release the engagement between a seat lock hook 301a and a hole 304a of the seat bracket 304. As a result, the seat bracket 304 is popped up forwardly around a shaft 303 by an elastic force of a spring 305 compressed between a seat lock lever 301 and the seat bracket 304. In such a state, the seat 30 can be manually raised, to thus ensure the insertion/removal path of the battery 4 in/from the battery housing case 5.

Locking means 501 is provided at an upper rear portion on the left side surface of the battery housing case 5. In the locking state, a locking pin 501a projects in the housing case 5 to be engaged in a recess 4a of the battery 4, whereby the removal of the battery 4 from the battery housing case 5 is prohibited.

According to this embodiment, the battery 4 can be removed from the battery housing case 5 by rotating the locking means 501 with a key of the power supply switch 29 to retreat the locking pin 501a. The locking pin 501a is usually biased in a projecting state, and when the battery 4 is inserted in the battery housing case 5, the pin 501a is retreated to an unlock state, and after the insertion of the battery 4 is completed, the pin 501a is engaged in the recess 4a, whereby the battery 4 is locked with the locking means 501.

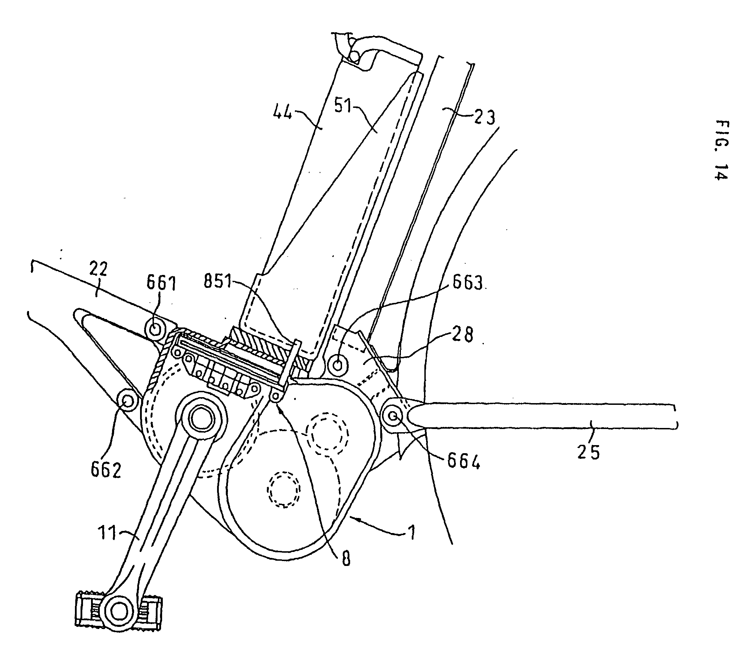

Another embodiment will be described below. Fig. 14 is a side view of a third embodiment of a motor-assisted bicycle in which parts being the same as or similar to those described above are designated by the same characters.

A body frame 2 in this embodiment is configured such that frame members thereof are connected to each other via a motor-driven assist unit 1. Since the motor-driven assist unit 1 constitutes part of the body frame 2, the weight of the frame members can be reduced, and since the motor-driven assist unit 1 can be disposed at a low position, the ease of the rider's striding action across of the body frame 2 can be improved.

A down pipe 22 is directly connected to the motor-driven assist unit 1 via hanger portions 661 and 662 provided on a front portion of the motor-driven assist unit 1. A seat post 23 is connected to chain stays 25 via a bracket 28, and the bracket 28 is connected to the motor-driven assist unit 1 via hanger portions 663 and 664 provided on an upper rear portion of the motor-driven assist unit 1. With this configuration, since the motor-driven assist unit 1 serves as a reinforcing member for connecting respective frame members to each other, it is possible to realize a lightweight, highly rigid vehicular body.

The motor-driven assist unit 1 has at its upper portion a battery mounting plane 401 which is perpendicular to the seat post 23 in a posture of the motor-driven assist unit mounted on the body frame, and a contact holder 860 to be described later) is provided on the battery mounting plane 401. Various terminals (contacts) for external connection are formed on the contact holder 860. A battery housing case 51 is mounted on the battery mounting plane 401 in such a manner that a side surface of the housing case 51 faces to the seat post 23. Contacts 851 (851a, 851b) and the like project from the motor-driven assist unit 1, and pass through the contact holder 860 and a bottom surface of the battery housing case 51 to be exposed in the battery housing case 51.

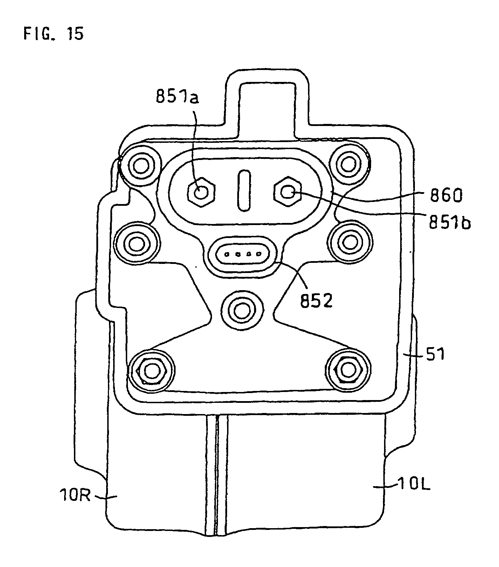

Fig. 15 is a top view showing an inner bottom portion of the battery housing case 51. The contact holder 860 is formed on the battery mounting plane 401, and a pair of positive and negative contacts 851a and 851b and a grommet 852 for transmission of control signals such as a switching signal, a sensor signal, and the like to or from a control unit 8 are held on the contact holder 860. A bottom surface of the battery 44 is provided with contacts, which are brought into contact with and electrically connected to the electrodes 851a and 851b when the battery 44 is housed in the battery housing case 51, and with a socket (not shown) connected to the grommet 852.

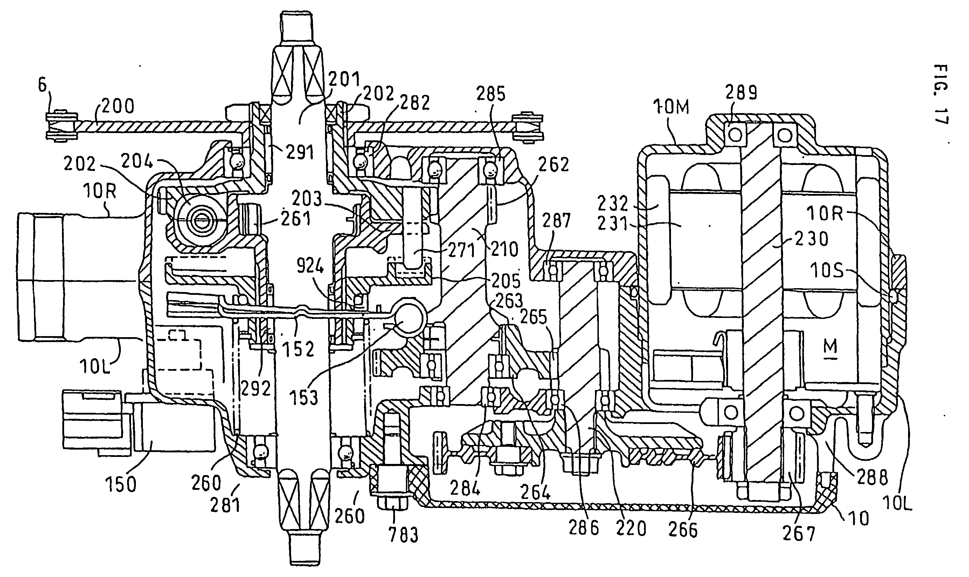

Fig. 16 is a side view of the motor-driven assist unit 1, with parts partially cutaway, and Fig. 17 is a sectional view taken on line A-A of Fig. 16, showing gear trains. In these figures, parts being the same as or similar to those described above are designated by the same characters.

A crank shaft 201 includes a leg-power detecting mechanism, and one end of the crank shaft 201 is rotatably supported by a case 10 via a bearing 281. A first drive gear 202 is fitted around the outer periphery of the other end of the crank shaft 201 via needle bearings 291 and 292, and the first drive gear 202 is rotatably supported by the vase 10 via a bearing 282. A pedal sprocket 200 is spline-connected to the outer periphery of a portion, exposed from the case 10, of the first drive gear 202, and is fastened thereto by means of a nut.

A second drive gear 203 is mounted to an approximately central portion of the crank shaft 201 via a one-way clutch 261. The first and second drive gears 202 and 203 are relatively rotatably connected to each other via a coil spring 204 exhibiting an elastic force in the circumferential direction. A slider 205 having a groove in the circumferential direction is axially slidably spline-connected to a small-diameter portion formed on the outer periphery of the second drive gear 203. The depth of the groove formed in the slider 205 is continuously changed in the circumferential direction. An engagement pin 271, which is fixed on the outer periphery of the first drive gear 202, is engaged in the groove of the slider 205.

A first idle shaft 210 is located behind the crank shaft 201, and is rotatably supported by bearings 284 and 285. A gear teeth portion 262 formed on the outer periphery of the first idle shaft 210 is meshed with the first drive shaft 202 of the crank shaft 201. A gear 264 is connected to the first idle shaft 210 via a one-way ratchet 263.

A second idle shaft 220 is located behind the first idle shaft 210, and is rotatably supported by bearings 286 and 287. A gear teeth portion 265 formed on the outer periphery of the second idle shaft 220 is meshed with the gear 264 of the first idle shaft 210. A resin gear 266 is connected to one end of the drive shaft 220.

A rotational shaft 230 of an electric motor M is located above the second idle shaft 220, and is rotatably supported by bearings 288 and 289. A rotor 231 is fixed to the rotational shaft 230, and a stator 232 is provided around the rotor 231. A gear teeth portion 276, which is formed on one end of the rotational shaft 230, is meshed with a resin gear 266 of the second idle shaft 220.

With this configuration, a leg-power as a man-power is inputted in the crank shaft 201 via pedals 12 and cranks 11 to rotate the second drive gear 203 via the one-way clutch 261 in synchronization with the crank shaft 201, and is simultaneously transmitted to the first drive gear 202 via the spring 204.

On the other hand, a rotational torque (assist-power) of the electric motor M is transmitted to the first idle shaft 210 via the gear teeth portion 267, gear 266, second idle shaft 220, and one-way ratchet 263, and is further transmitted to the first drive gear 202 via the gear teeth portion 262. A resultant power of the leg-power and assist-power transmitted to the first drive gear 202 is transmitted to a rear wheel WR via a pedal sprocket 200 and a chain 6.

At this time, the spring 204 is compressed in the circumferential direction in response to the leg-power inputted to the crank shaft 201, to allow the drive gears 202 and 203 to be relatively rotated, thereby causing a differential phase therebetween. As a result, the engagement pin 205 is turned in the groove of the slider 205, and the slider 205 is axially slid on the crank shaft 201 against the elastic force of a spring 260 to an extent equivalent the depth of the groove which is changed depending on the turned amount of the engagement pin 205. The axial sliding motion of the slider 205 displaces a detecting shaft 151 of a stroke sensor 150 via a displacement detecting lever 152, whereby the leg-power is detected by the stroke sensor 150.

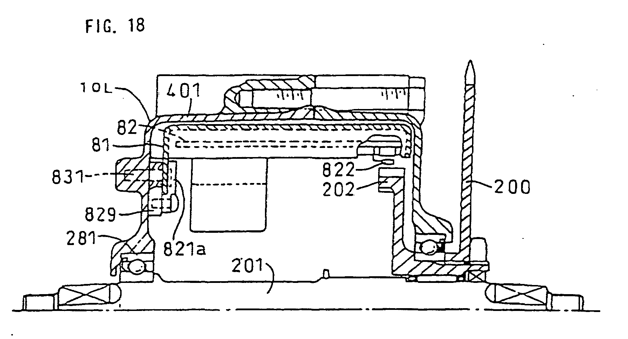

As shown in Fig. 18, a control unit 8 is disposed on the inner surface (back surface) of a battery mounting plane 401. The control unit 8 is configured such that a control circuit board 82 is contained in a dish-like case 81 and a gap therebetween and a board surface are molded with an insulating resin 83. Various control circuits 820 power transistors 821a and diodes 821b, and a rotation sensor 822 are mounted on the control circuit board 82. The power transistors 821a and diodes 821b are fixedly in area-contact with a radiation plate 829.

The rotation sensor 822 is fixed to a portion, near an end portion, of the control circuit board 82 in such a manner as to face to a gear teeth portion of the first drive gear 202 of the crank shaft 201. Like the previous embodiment, a positioning pin is formed on the dish-like case 81, and the corresponding position hole is formed in a case 10R.

The control unit 8 is positioned with respect to the case 10 so that when the positioning pin is inserted in the position hole, the rotation sensor 822 is fixed to a specific position of the control circuit board 82 while keeping a specific height to thereby establish a predetermined relative positional relationship with the gear teeth portion of the first drive gear 202.

As shown in Fig. 12, the control unit 8 is mounted to the case 10 by fastening both sides of an end portion, opposed to the end portion on which the rotation sensor 822 is provided, of the dish-like case 81 (see Fig. 16) to the left case 10L by means of screws 831.

According to this embodiment, since the external electrodes are integrally provided on the outer surface of the case of the motor-driven assist unit 1, the battery 44 can be directly disposed on the motor-driven assist unit 1. As a result, it is possible to shorten a power supply line between the motor-driven assist unit 1 and the battery 44.

Further, according to this embodiment, since the leg-power detecting mechanism is provided on the crank shaft 201, it is possible to eliminate the need of ensuring a space which is required if the mechanism is provided separately from the crank shaft 201. As a result, it is possible to ensure a space required for disposing the control unit 8 without enlargement of the motor-driven assist unit 1.

It is consequently possible to provide a motor-driven assist unit capable of enhancing the cooling performance of a control board contained in the unit and also of lowering the center of gravity of the unit, and to provide a motor-driven assist unit capable of containing a control unit without enlargement of the motor-driven assist unit, and shortening the lengths of a signal line and a power supply line.

To achieve this, a motor-driven assist unit 1 contains an electric motor M for generating an assist-power in response to a leg-power inputted to a crank shaft and a control board 82 or control unit 8 for controlling the electric motor M, wherein the assist-power and the leg-power are synthesized and the resultant power is transmitted to a drive wheel. The motor-driven assist unit may have the control board 82 located at a position offset forwardly, downwardly from the crank shaft 101 in a posture of the motor-driven assist unit 1 mounted on a body frame 2, and that at least a rotation sensor 822 for detecting the rotational speed of the crank shaft 101 is mounted on the control board 82, and the control board 82 may be disposed near a rotor 111 rotated in synchronization with the crank shaft 101 in such a manner that a positional relationship between the rotation sensor 822 and the rotor 111 is kept at a predetermined relation.

## Claims

1. A vehicle with a motor-driven assist unit (1), said vehicle comprising a crank shaft (101) and a drive wheel (WR), said motor-driven assist unit comprising a case (10) containing an electric motor (M) for generating an assist-power in response to a leg-power inputted to said crank shaft (101) and a control unit (8) therefor, wherein said assist-power and said leg-power are synthesized and the resultant power is transmitted to a drive wheel (WR), wherein:
a battery support (401) is provided for supporting a battery (4; 44) supplying power to said electric motor (M),
positive and negative contacts (851) are in an exposed state fixed to a contact portion (860) provided on said battery support (401) to electrically connect said battery (4; 44) to said positive and negative contacts (851;
and
a power supply line (751) is provided inside the case (10) of said motor-driven assist unit (1) for electrically connecting, said positive and negative contacts (851) to said electric motor (M); **characterized in that** said contact portion (860) and said battery support (401) are provided on an outer surface of said case (10) of said motor-driven assist unit (1).

2. A vehicle with a motor-driven assist unit according to claim 1, **characterized in that** said control unit (8) is disposed above said crank shaft (101) in a posture of said motor-driven assist unit (1) mounted to a body frame (2).

3. A vehicle with a motor-driven assist unit according to claim 1 or 2, **characterized in that** said contacts (851) project from said case (10) of said motor-driven assist unit.

4. A vehicle with a motor-driven assist unit (1) according to one of the preceding claims, **characterized in that** said contact portion (860) is formed by a contact holder (860) provided on a battery mounting plane (401) of said case (10) of said motor-driven assist unit (1).

5. A vehicle with a motor-driven assist unit (1) according to one of claims 1 to 3, **characterized in that** said contact portion and said battery support are formed by an outer surface of said case (10) of said motor-driven assist unit (1).

6. A vehicle with a motor-driven assist unit (1) according to claim 5, **characterized in that** said contacts are integrally provided on said outer surface of said case (10) of said motor-driven assist unit (1).

7. A vehicle with a motor-driven assist unit (1) according to claim 6, **characterized in that** said control unit (8) is disposed on an inner surface of a battery mounting plane (401) of said case (10) of said motor-driven assist unit (1), wherein an outer surface of said battery mounting plane (401) serves as said battery support (401).

8. A vehicle with a motor-driven assist unit (1), according to one of the preceding claims, **characterized in that** said motor-driven assist unit (1) contains a control board (82) for controlling said electric motor (M), wherein
said control board (82) is located at a position offset forwardly, downwardly from said crank shaft (101) in a posture of said motor-driven assist unit (1) mounted on a body frame (2) of said vehicle.

9. A vehicle with a motor-driven assist unit (1) according to claim 8, **characterized in that** said control board (82) is tilted downwardly from the front to rear of said body frame (2) in the posture of said motor-driven assist unit (1) mounted on said body frame (2).

10. A vehicle with a motor-driven assist unit (1) according to claim 8 or 9, **characterized in that** said control board (82) is disposed with its circuit part mounting plane directed inwardly.

11. A vehicle with a motor-driven assist unit (1) according to any one of claims 8 to 10, **characterized in that** said body frame (2) comprises:
a main frame (22) extending rearwardly, downwardly and being at its lower portion curved in a downwardly projecting shape; and
a seat post (23) branched from a portion, near a rear end, of said main frame (22) and extending rearwardly, upwardly therefrom,
wherein said motor-driven assist unit (1) is mounted to said body frame (2) such that a front portion of said unit is connected to a rear end portion of said main frame (22) at a position lower than said crank shaft (101) and an upper portion of said unit (1) is connected to and suspended from said seat post (23).

12. A vehicle with a motor-driven assist unit (1) according to claim 11, **characterized in that** said electric motor (M) is disposed behind said crank shaft (101) in the posture of said motor-driven assist unit (1) mounted on said body frame (2), and a battery (4) for supplying a power to said electric motor (M) is mounted on said motor-driven assist unit (1) along the back surface of said seat post (23).

13. A vehicle with a motor-driven assist unit (1) according to claim 8, **characterized in that** at least a rotation sensor (822) for detecting the rotational speed of said crank shaft (101) is mounted on said control board (82); and
said control board (82) is disposed near a rotor (111) rotated in synchronization with said crank shaft (101) in such a manner that a positional relationship between said rotation sensor (822) and said rotor (111) is kept at a predetermined relation.

14. A vehicle with a motor-driven assist unit (1) according to claim 13, **characterized in that** said control board comprises:
positioning means (811, 911; 812, 912) for positioning said control board (8) with respect to said motor-driven assist unit (1) so that a relative positional relationship between said rotation sensor (822) and said rotor (111) is kept at a predetermined relationship.

15. A vehicle with a motor-driven assist unit (1) according to claim 14, **characterized in that** said rotation sensor (822) and said positioning means (811, 911; 812, 912) are disposed near one side portion of said control board (82); and
said control board (82) is engaged, at said one side portion, with said motor-driven assist unit (1) by said positioning means (811, 911; 812, 912), and is fastened, at the other side portion, to said motor-driven assist unit (1) by fastening means (831).

16. A vehicle with a motor-driven assist unit (1) according to claim 13, further comprising:
a large-diameter gear, as a rotor (111), provided on said crank shaft (101);
an idle shaft (102) having a small-diameter gear (113) meshed with said large-diameter gear (111), said idle shaft (102) being disposed in parallel to said crank shaft (101);
an output shaft (105) disposed in parallel to said idle shaft (102) and meshed therewith;
connecting means (6) for connecting said output shaft (105) to a drive wheel (WR); and
leg-power detecting means (924, 152, 150) for detecting a leg-power inputted to said crank shaft (101), said means being provided on said idle shaft (102);
wherein said rotation sensor (822) is disposed near said large-diameter gear (111) for detecting the rotational speed of said large-diameter gear (111).

17. A vehicle with a motor-driven assist unit according to claim 9, **characterized in that** said leg-power detecting means (924, 152, 150) contains a sensor (150), fixed on an inner wall of a case (10R) of said motor-driven assist unit (1), for outputting an electric signal in response to a leg-power.

## Patentansprüche

1. Fahrzeug mit einer motorgetriebenen Unterstützungseinheit (1), wobei das Fahrzeug eine Kurbelwelle (101) und ein Antriebsrad (WR) umfasst, wobei die motorgetriebene Unterstützungseinheit ein Gehäuse (10) umfasst, welches einen Elektromotor (M) zur Erzeugung einer Unterstützungskraft in Antwort auf eine der Kurbelwelle (101) eingegebene Beinkraft sowie eine Steuer/Regeleinheit (8) für diese umfasst, wobei die Unterstützungskraft und die Beinkraft synthetisiert werden und die resultierende Kraft zu einem Antriebsrad (WR) übertragen wird, wobei eine Batterieabstützung (401) zum Abstützen einer Batterie (4; 44) vorgesehen ist, welche Energie an den Elektromotor (M) liefert, wobei positive und negative Kontakte (851) in einem freiliegenden Zustand an einem an der Batterieabstützung (401) vorgesehenen Kontaktabschnitt (860) befestigt sind, um die Batterie (4; 44) elektrisch mit den positiven und negativen Kontakten (851) zu verbinden und wobei eine Energiezufuhrleitung (751) in dem Gehäuse (10) der motorgetriebenen Unterstützungseinheit (1) vorgesehen ist, um die positiven und negativen Kontakte (851) mit dem Elektromotor (M) elektrisch zu verbinden; **dadurch gekennzeichnet, dass** der Kontaktabschnitt (860) und die Batterieabstützung (401) an einer Außenfläche des Gehäuses (10) der motorgetriebenen Unterstützungseinheit (1) vorgesehen sind.

2. Fahrzeug mit einer motorgetriebenen Unterstützungseinheit nach Anspruch 1, **dadurch gekennzeichnet, dass** die Steuer/Regeleinheit (8) über der Kurbelwelle (101) in einer an einen Körperrahmen (2) montierten Stellung der motorgetriebenen Unterstützungseinheit (1) angeordnet ist.

3. Fahrzeug mit einer motorgetriebenen Unterstützungseinheit nach Anspruch 1 oder 2, **dadurch gekennzeichnet, dass** die Kontakte (851) von dem Gehäuse (10) der motorgetriebenen Unterstützungseinheit vorstehen.

4. Fahrzeug mit einer motorgetriebenen Unterstützungseinheit (1) nach einem der vorhergehenden Ansprüche, **dadurch gekennzeichnet, dass** der Kontaktabschnitt (860) durch einen Kontakthalter (860) gebildet ist, welcher an einer Batterieanbringungsebene (401) des Gehäuses (10) der motorgetriebenen Unterstützungseinheit (1) vorgesehen ist.

5. Fahrzeug mit einer motorgetriebenen Unterstützungseinheit (1) nach einem der Ansprüche 1 bis 3, **dadurch gekennzeichnet, dass** der Kontaktabschnitt und die Batterieabstützung durch eine Außenfläche des Gehäuses (10) der motorgetriebenen Unterstützungseinheit (1) gebildet sind.

6. Fahrzeug mit einer motorgetriebenen Unterstützungseinheit (1) nach Anspruch 5, **dadurch gekennzeichnet, dass** die Kontakte integral an der Außenfläche des Gehäuses (10) der motorgetriebenen Unterstützungseinheit (1) vorgesehen sind.

7. Fahrzeug mit einer motorgetriebenen Unterstützungseinheit (1) nach Anspruch 6, **dadurch gekennzeichnet, dass** die Steuer/Regeleinheit (8) an einer Innenfläche einer Batterieanbringungsebene (401) des Gehäuses (10) der motorgetriebenen Unterstützungseinheit (1) angeordnet ist, wobei eine Außenfläche der Batterieanbringungsebene (401) als die Batterieabstützung (401) dient.

8. Fahrzeug mit einer motorgetriebenen Unterstützungseinheit (1) nach einem der vorhergehenden Ansprüche, **dadurch gekennzeichnet, dass** die motorgetriebene Unterstützungseinheit (1) eine Steuer/Regelplatine (82) zur Steuerung/Regelung des Elektromotors (M) umfasst, wobei die Steuer/Regelplatine (82) bezüglich der Kurbelwelle (101) in einer nach vorne und nach unten versetzten Position in einer an einem Körperrahmen (2) des Fahrzeugs angebrachten Stellung der motorgetriebenen Unterstützungseinheit (1) angeordnet ist.

9. Fahrzeug mit einer motorgetriebenen Unterstützungseinheit (1) nach Anspruch 8, **dadurch gekennzeichnet, dass** die Steuer/Regelplatine (82) von der Vorderseite zur Rückseite des Körperrahmens (2) in der an dem Körperrahmen (2) angebrachten Stellung der motorgetriebenen Unterstützungseinheit (101) nach unten geneigt ist.

10. Fahrzeug mit einer motorgetriebenen Unterstützungseinheit (1) nach Anspruch 8 oder 9, **dadurch gekennzeichnet, dass** die Steuer/Regelplatine (82) derart angeordnet ist, dass ihre Schaltungsteil-Anbringungsebene nach innen gerichtet ist.

11. Fahrzeug mit einer motorgetriebenen Unterstützungseinheit (1) nach einem der Ansprüche 8 bis 10, **dadurch gekennzeichnet, dass** der Körperrahmen (2) umfasst:
einen Hauptrahmen (22), welcher sich nach hinten und nach unten erstreckt und welcher an seinem unteren Abschnitt in einer nach unten vorstehenden Gestalt gekrümmt ist; sowie
eine Sitzstütze (23), welche von einem Abschnitt nahe einem hinteren Ende des Hauptrahmens (22) abzweigt und von diesem nach hinten und nach oben absteht,
wobei die motorgetriebene Unterstützungseinheit (1) derart an dem Körperrahmen (2) angebracht ist, dass ein vorderer Abschnitt der Einheit mit einem hinteren Endabschnitt des Hauptrahmens (22) bei einer Position verbunden ist, welche niedriger als die Kurbelwelle (101) ist, und ein oberer Abschnitt der Einheit (1) mit der Sitzstütze (23) verbunden ist und von dieser herabhängt.

12. Fahrzeug mit einer motorgetriebenen Unterstützungseinheit (1) nach Anspruch 11, **dadurch gekennzeichnet, dass** der Elektromotor (M) hinter der Kurbelwelle (101) in der an dem Körperrahmen (2) angebrachten Stellung der motorgetriebenen Unterstützungseinheit angeordnet ist, und dass eine Batterie (4) zum Zuführen von Energie zu dem Elektromotor (M) an der motorgetriebenen Unterstützungseinheit (1) entlang der hinteren Fläche der Sitzstütze (23) angebracht ist.

13. Fahrzeug mit einer motorgetriebenen Unterstützungseinheit (1) nach Anspruch 8, **dadurch gekennzeichnet, dass** wenigstens ein Drehsensor (822) zur Erfassung der Drehzahl der Kurbelwelle (101) an der Steuer/Regelplatine (82) angebracht ist; und dass die Steuer/Regelplantine (82) nahe einem Rotor (111) angeordnet ist, welcher synchron mit der Kurbelwelle (101) derart gedreht wird, dass eine Positionsbeziehung zwischen dem Drehsensor (822) und dem Rotor (111) in einer vorbestimmten Beziehung gehalten wird.

14. Fahrzeug mit einer motorgetriebenen Unterstützungseinheit (1) nach Anspruch 13, **dadurch gekennzeichnet, dass** die Steuer/Regelplatine umfasst:
ein Positionierungsmittel (811, 911; 812, 912) zum Positionieren der Steuer/Regelplatine (8) bezüglich der motorgetriebenen Unterstützungseinheit (1) derart, dass eine relative Positionsbeziehung zwischen dem Drehsensor (822) und dem Rotor (111) in einer vorbestimmten Beziehung gehalten wird.

15. Fahrzeug mit einer motorgetriebenen Unterstützungseinheit (1) nach Anspruch 14, **dadurch gekennzeichnet, dass** der Drehsensor (822) und das Positionierungsmittel (811, 911; 812, 912) nahe einem Seitenabschnitt der Steuer/Regelplatine (82) angeordnet sind; und dass die Steuer/Regelplatine (82) an einem Seitenabschnitt mit der motorgetriebenen Unterstützungseinheit (1) durch das Positionierungsmittel (811, 911; 812, 912) in Eingriff ist und am anderen Seitenabschnitt an der motorgetriebenen Unterstützungseinheit (1) durch Befestigungsmittel (831 ) befestigt ist.

16. Fahrzeug mit einer motorgetriebenen Unterstützungseinheit (1) nach Anspruch 13, femer umfassend:
ein Zahnrad mit großem Durchmesser als ein Rotor (111 ), welches an der Kurbelwelle (101) vorgesehen ist;
eine Zwischenwelle (102) mit einem Zahnrad (113) mit kleinem Durchmesser, welches mit dem Zahnrad (111) mit großem Durchmesser kämmt, wobei die Zwischenwelle (102) parallel zur Kurbelwelle (101) angeordnet ist;
eine Ausgangswelle (105), welche parallel zur Zwischenwelle (102) angeordnet ist und mit dieser kämmt;
ein Verbindungsmittel (6) zum Verbinden der Ausgangswelle (105) mit einem Antriebsrad (WR); sowie
ein Beinkrafterfassungsmittel (924, 152, 150) zum Erfassen einer der Kurbelwelle (101) eingegebenen Beinkraft, wobei das Mittel an der Zwischenwelle (102) vorgesehen ist;
wobei der Drehsensor (822) nahe dem Zahnrad (111) mit großem Durchmesser angeordet ist, um die Drehzahl des Zahnrads (111) mit großem Durchmesser zu erfassen.

17. Fahrzeug mit einer motorgetriebenen Unterstützungseinheit nach Anspruch 9, **dadurch gekennzeichnet, dass** das Beinkrafterfassungsmittel (924, 152, 150) einen Sensor (150) umfasst, welcher an einer Innenwand eines Gehäuses (10R) der motorgetriebenen Unterstützungseinheit (1) festgelegt ist, um ein elektrisches Signal in Antwort auf eine Beinkraft auszugeben.

## Revendications

1. Véhicule muni d'une unité d'assistance motorisée (1), ledit véhicule comportant un vilebrequin (101) et une roue motrice (WR) , ladite unité d'assistance motorisée comportant un boîtier (10) contenant un moteur électrique (M) pour générer une puissance d'assistance en réponse à une puissance de jambes entrée vers ledit vilebrequin (101) et une unité de commande (8) pour celui-ci, ladite puissance d'assistance et ladite puissance de jambes étant synthétisées et la puissance résultante étant transmise à une roue motrice (WR), dans lequel :
un support de batterie (401) est agencé pour supporter une batterie (4, 44) alimentant du courant vers ledit moteur électrique (M),
des contacts positif et négatif (851) sont dans un état exposé, fixés sur une partie de contact (860) agencée sur ledit support de batterie (401) pour connecter électriquement ladite batterie (4 ; 44) auxdits contacts positif et négatif (851),
et
une ligne d'alimentation électrique (751) est agencée à l'intérieur du boîtier (10) de ladite unité d'assistance motorisée (1) pour connecter électriquement lesdits contacts positif et négatif (851) audit moteur électrique (M),
**caractérisé en ce que** ladite partie de contact (860) et ledit support de batterie (401) sont agencés sur une surface extérieure dudit boîtier (10) de ladite unité d'assistance motorisée (1).

2. Véhicule muni d'une unité d'assistance motorisée selon la revendication 1, **caractérisé en ce que** ladite unité de commande (8) est disposée au-dessus dudit vilebrequin (101) dans une position de ladite unité d'assistance motorisée (1) montée sur une châssis de corps (2).

3. Véhicule muni d'une unité d'assistance motorisée selon la revendication 1 ou 2, **caractérisé en ce que** lesdits contacts (851) font saillie à partir dudit boîtier (10) de ladite unité d'assistance motorisée.

4. Véhicule muni d'une unité d'assistance motorisée (1) selon l'une quelconque des revendications précédentes, **caractérisé en ce que** ladite partie de contact (860) est formée par un porte-contact (860) agencé sur un plan de montage de batterie (401) dudit boîtier (10) de ladite unité d'assistance motorisée (1) .

5. Véhicule muni d'une unité d'assistance motorisée (1) selon l'une quelconque des revendications 1 à 3, **caractérisé en ce que** ladite partie de contact et ledit support de batterie sont formés par une surface extérieure dudit boîtier (10) de ladite unité d'assistance motorisée (1).

6. Véhicule muni d'une unité d'assistance motorisée (1) selon la revendication 5, **caractérisé en ce que** lesdits contacts sont agencés en un seul bloc sur ladite surface extérieure dudit boîtier (10) de ladite unité d'assistance motorisée (1).

7. Véhicule muni d'une unité d'assistance motorisée (1) selon la revendication 6, **caractérisé en ce que** ladite unité de commande (8) est disposée sur une surface intérieure d'un plan de montage de batterie (401) dudit boîtier (10) de ladite unité d'assistance motorisée (1), dans lequel une surface extérieure dudit plan de montage de batterie (401) sert en tant que ledit support de batterie (401).

8. Véhicule muni d'une unité d'assistance motorisée (1) selon l'une quelconque des revendications précédentes, **caractérisé en ce que** ladite unité d'assistance motorisée (1) contient un tableau de commande (82) pour commander ledit moteur électrique (M), dans lequel
ledit tableau de commande (82) est placé en une position décalée vers l'avant et vers le bas par rapport audit vilebrequin (101) dans une position de ladite unité d'assistance motorisée (1) montée sur un châssis de corps (2) dudit véhicule.

9. Véhicule muni d'une unité d'assistance motorisée (1) selon la revendication 8, **caractérisé en ce que** ledit tableau de commande (82) est incliné vers le bas, de l'avant vers l'arrière dudit châssis de corps (2), dans la position de ladite unité d'assistance motorisée (1) montée sur ledit châssis de corps (2).

10. Véhicule muni d'une unité d'assistance motorisée (1) selon la revendication 8 ou 9, **caractérisé en ce que** le tableau de commande (82) est disposé en ayant son plan de montage de partie de circuit dirigé vers l'intérieur.

11. Véhicule muni d'une unité d'assistance motorisée (1) selon l'une quelconque des revendications 8 à 10, **caractérisé en ce que** ledit châssis de corps (2) comporte :
un châssis principal (22) s'étendant vers l'arrière, vers le bas et étant, au niveau de sa partie inférieure, incurvé en une forme faisant saillie vers le bas, et
un montant de siège (23) ramifié à partir d'une partie, proche d'une extrémité arrière, dudit châssis principal (22), et s'étendant vers l'arrière et vers le haut à partir de celle-ci,
dans lequel ladite unité d'assistance motorisée (1) est montée sur ledit châssis de corps (2) de sorte qu'une partie avant de ladite unité est connectée à une partie d'extrémité arrière dudit châssis principal (22) en une position inférieure audit vilebrequin (101), et une partie supérieure de ladite unité (1) est connectée audit montant de siège (23), et est suspendue à partir de celui-ci.

12. Véhicule muni d'une unité d'assistance motorisée (1) selon la revendication 11, **caractérisé en ce que** ledit moteur électrique (M) est disposé derrière ledit vilebrequin (101) dans la position de ladite unité à assistance motorisée (1) montée sur ledit châssis de corps (2), et **en ce qu'**une batterie (4) destinée à délivrer du courant vers ledit moteur électrique (M) est montée sur ladite unité d'assistance motorisée (1) le long de la surface arrière dudit montant de siège (23).

13. Véhicule muni d'une unité d'assistance motorisée (1) selon la revendication 8, **caractérisé en ce qu'**au moins un capteur de rotation (822) destiné à détecter la vitesse de rotation dudit vilebrequin (101) est monté sur ledit tableau de commande (82), et ledit tableau de commande (82) est disposé près d'un rotor (111) mis en rotation en synchronisation avec ledit vilebrequin (101), de telle manière qu'une relation de position entre ledit capteur de rotation (822) et ledit rotor (111) est maintenue au niveau d'une relation prédéterminée.

14. Véhicule muni d'une unité d'assistance motorisée (1) selon la revendication 13, **caractérisé en ce que** ledit tableau de commande comporte :
des moyens de positionnement (811, 911; 812, 912) destinés à positionner ledit tableau de commande (8) par rapport à ladite unité d'assistance motorisée (1) de sorte qu'une relation de position relative entre ledit capteur de rotation (822) et ledit rotor (111) est maintenue au niveau d'une relation prédéterminée.

15. Véhicule muni d'une unité d'assistance motorisée (1) selon la revendication 14, **caractérisé en ce que** ledit capteur de rotation (822) et lesdits moyens de positionnement (811, 911 ; 812, 912) sont disposés près d'une partie latérale dudit tableau de commande (82), et
ledit tableau de commande (82) est mis en prise, au niveau d'une première partie latérale, avec ladite unité d'assistance motorisée (1) par lesdits moyens de positionnement (811, 911 ; 812, 912), et est fixé, au niveau de l'autre partie latérale, sur ladite unité d'assistance motorisée (1) par des moyens de fixation (831).

16. Véhicule muni d'une unité d'assistance motorisée (1) selon la revendication 13, comportant de plus :
une roue dentée d'un grand diamètre, telle qu'un rotor (111), agencée sur ledit vilebrequin (101),
un arbre monté fou (102) ayant une roue dentée de petit diamètre (113) engrenée avec ladite roue dentée de grand diamètre (111), ledit arbre monté fou (102) étant disposé parallèlement audit vilebrequin (101) ,
un arbre de sortie (105) disposé parallèlement audit arbre monté fou (102) et engrené avec celui-ci,
des moyens de connexion (6) destinés à connecter ledit arbre de sortie (105) à une roue motrice (WR), et
des moyens de détection de puissance de jambes (924, 152, 150) destinés à détecter une puissance de jambes délivrée audit vilebrequin (101), lesdits moyens étant agencés sur ledit arbre monté fou (102),
dans lequel ledit capteur de rotation (822) est disposé près de ladite roue dentée de grand diamètre (111) pour détecter la vitesse de rotation de ladite roue dentée de grand diamètre (111).

17. Véhicule muni d'une unité d'assistance motorisée selon la revendication 9, **caractérisé en ce que** lesdits moyens de détection de puissance de jambes (924, 152, 150) contiennent un capteur (150), fixé sur une paroi intérieure d'un boîtier (10R) de ladite unité d'assistance motorisée (1), pour délivrer un signal électrique en réponse à une puissance de jambes.
